# EUROPEAN PATENT SPECIFICATION

(11) **EP 1 559 240 B1**
(45) Date of publication and mention of the grant of the patent: **12.12.2012**
(21) Application number: 03811190.2
(22) Date of filing: 08.07.2003
(51) Int. Cl.: H04L 12/18, H04L 29/06, H04L 12/58

(54) **SYSTEM AND METHOD FOR ADD-ON SERVICES, SECONDARY AUTHENTICATION, AUTHORIZATION AND/OR SECURE COMMUNICATION FOR DIALOG BASED PROTOCOLS AND SYSTEMS**
VERFAHREN UND SYSTEM FÜR ZUSATZDIENSTEN, ZUR SEKUNDÄREN AUTHENTIFIZIERUNG, ZUR AUTHORISIERUNG UND/ODER ZUR GESICHERTEN ÜBERTRAGUNG, FÜR DIALOGBASIERTE PROTOKOLLEN UND SYSTEMEN
SYSTEME ET PROCEDE DESTINES A DES SERVICES ADDITIFS, AUTHENTIFICATION SECONDAIRE, AUTORISATION ET/OU COMMUNICATION SECURISEE POUR PROTOCOLES ET SYSTEMES A BASE DE DIALOGUE

(30) Priority: 06.11.2002 US 288548
(43) Date of publication of application: 03.08.2005
(73) Proprietor: SYMANTEC CORPORATION, Mountain View, CA 94043 (US)
(72) Inventor: SHAH, Milan, MA 01748 (US); HASSOUNAH, Khaled, W., Boston, MA 02110 (US)
(74) Representative: Meldrum, David James
(86) International application number: PCT/US2003/021354
(87) International publication number: WO 2004/045144

(56) References cited:
- EP-A- 1 104 964
- WO-A-01/54377

## Description

### BACKGROUND OF THE INVENTION

### Field of the Invention

The present invention relates generally to a system and method for providing add-on services and/or secure communication for systems using a dialog based interactive protocol (e.g., Instant Messaging) and, more particularly, to a system and method that provides add-on services and/or facilitates authentication, authorization and/or secure communications of a user accessing a first computer system, separately from the authentication and security mechanism(s) provided by a second computer system using a dialog based interactive protocol system.

### Background Description

Several dialog based interactive protocols and systems have witnessed rising popularity in applications such as Instant Messaging (IM). Such protocols and systems typically include some mechanism for authentication of the users using the system, but typically lack a mechanism for securing the dialog between users.

For example, an America Online Corporation (AOL) Instant Messenger (AIM) session begins with a sign on process that uses a user's AOL screen name and a password encry6pted using MD5. AIM messages are not, however, encrypted.

MSN Messenger user passwords are encrypted using a conventional MD5 hash algorithm. However, all messages other than the authentication sequence are in clear text.

Popular IM systems such as AOL, MSN, and Yahoo! Messenger are primarily designed for the consumer space where ease of use and minimal configuration are primary design goals. These design goals limit the amount of security that can be built into the IM protocol. For example, the use of public-key techniques for authentication is limited by the difficulty of reliably distributing and configuring a public-key certificate to each client.

For a variety of reasons including, for example, the need to ensure a sufficient level of security, scalability, and availability, each of the above-identified systems are closed. That is, the only access to them is via client software provided by the system operator.

Conventional instant messaging systems typically lack add-on services such as the ability to, for example, save/record a dialog onto a storage medium (e.g., into a database), scan incoming dialog messages for viruses, and/or apply, for example, natural language recognition techniques to monitor the dialog for inappropriate material.

International Patent Publication WO01/54377A discloses a system that enables users of web browsers to securely exchange messages over a network. Users have accounts on a central server to which they log in. The users prepare the messages using their local web browsers, and the browsers then send the messages to the central server. The central server, in turn, stores a message until the recipient logs in, at which point the central server delivers the message. Messages exchanged between the browsers and the central server are encrypted using the Secure Socket Layer (SSL).

### SUMMARY OF THE INVENTION

In one exemplary use of the present invention, at least one embodiment uses a first computer system that provides a desired service, and a second computer system, such as America Online Corporation (AOL) Instant Messaging Service (AIM), provides at least a dialog based interactive protocol service.

A system and method is provided that provides and/or facilitates protocol translations/conversions, authentication and/or secure communications with a user accessing the first computer system, separately from the authentication and security mechanism(s) provided by the second computer system. Further, at least one embodiment of the present invention provides a system and method whereby users of a second system that utilizes one or more dialog based interactive protocols (e.g., AIM) can interact with a first computer system and/or personnel associated therewith to, for example, participate, initiate and/or conclude an automated process, and/or to, for example, obtain or disseminate information pertaining to an item and/or process of interest.
According to aspects of the invention, there is provided a method defined by claim 1, a computer program product defined by the features of claim 17 and a device defined by the features of claim 23.

In addition, at least one aspect of the present invention provides a system and method for secondary authentication of users by the first computer system, and optionally provides secure communication for use by the entity owning the first computer system(s) with which user interaction is desired. Advantageously, changes are not required to or by the entity that owns and controls the second computer system using the dialog based interactive protocol system. In particular, at least one embodiment of the present invention enables a first entity (e.g., one or more users and/or computers of a first organization) that owns and controls the computer system(s) with which user interaction is desired to communicate with and/or be utilized by one or more users of a second system that enables users of the second system to utilize one or more deployed dialog based interactive protocol systems which are not owned, controlled, or trusted by the first organization.

In addition, at least one exemplary embodiment of the present invention uses a dialog based interactive protocol system (e.g., AIM) to communicate to a user of the second system, for example, a pointer (e.g., a link) to the first system. The first system can advantageously operate independently of the second system that owns and operates the dialog based interactive protocol system.

Further, users of the second system are able to dereference the pointer, and authenticate themselves with the (separate) first system. One aspect of the invention further keeps an association of the authentication information with the session used by the user for the dialog based interactive communication. By maintaining the association between the first system authentication information and the session used for dialog, a user initially using the second system can now advantageously utilize, for example, the first system using one or more dialog based interactive protocols for communications with the first system. In addition, since the user has been authenticated by the first system, controlled and/or secure information can be disseminated to the user. Users can generally communicate with the first system in accordance with the security procedures and/or protocols used by the first system.

In accordance with another embodiment of the present invention, a system and method is provided that provides a range of add-on services to conventional interactive based dialog protocol systems. For example, an exemplary embodiment of the present invention provides the ability to encrypt at least a portion of the dialog, record the dialog in a permanent store, and/or monitor (e.g., scan) at least a portion of the dialog for inappropriate content using, for example, natural language techniques. An exemplary embodiment of the add-on services aspect of the present invention comprises a software module that interfaces and/or communicates with, for example, the client software and a dialog based interactive protocol system (e.g., an IM system). The module preferably transparently (or substantially transparently so as to not substantially adversely affect other system functions) utilizes the Transmission Control Protocol (TCP) connection between an IM client and the server. The invention can, for example, intercept and relay the messages of the dialog, and can provide additional services. Insofar as the HyperText Transport Protocol (HTTP) also uses TCP as a transport layer, the present invention also contemplates intercepting IM messages over the HTTP.

In operation, clients of a dialog based interactive protocol create a conventional TCP connection over, for example, the Internet and to one or more servers that broker and/or implement the dialog based protocol. The dialog is then carried out over the TCP connection. The TCP connection also serves as a mechanism that allows the server(s) to deduce and "advertise" (communicate) the availability of people that currently have a connection that can be used to engage in a dialog. For example, an IM feature known as a "Buddy List" enables users to create, organize, and manage a list of online friends, family members, and co-workers on a PC and/or a mobile phone. A Buddy List feature window enables users to see which contacts (i.e., "Buddies") are offline or busy, and which are online and ready for messaging. The Buddy List thus enables users of the system to know which other users are available for a dialog.

To find a server to connect to, a client can utilize the Domain Name System (DNS) to identify and locate the TCP/Intemet Protocol (TCP/IP) address of a server given the name of the server. Conventional DNS implementations generally access a local hosts file for name-to-address maps before using the configured DNS servers for resolving a name to its address.

The present invention may utilize a special IP address of 127.0.0.1, known as a loopback address, which points to the local computer. Thus, an attempt to make a connection to the address of 127.0.0.1 results in an attempt to make a connection to the computer that is initiating the connection itself (hence, a loopback connection).

This embodiment of the present invention adds an entry to the hosts file that maps or associates the name of a dialog based interactive protocol server maintained and operated by, for example, an Internet Service Provider to the IP loopback address (i.e., 127.0.0.1). It can be implemented as software that is installed (e.g., via a conventional download) on a client computer in a conventional manner. Once installed, the software monitors (or "listens on") ports that the protocol server(s) listen(s) on. When a dialog based interactive protocol (e.g., AIM) client attempts to connect to a dialog based interactive protocol server, the attempt to resolve the name of the server results in a mapping to the local computer because of the entry in the hosts file. Thus, the dialog based interactive protocol server establishes a TCP connection to, for example, the local computer (or wireless device), where an exemplary embodiment of the method in accordance with the present invention accepts the TCP connection. In response to an incoming connection, an exemplary embodiment of the present invention creates a connection to a server operated by the provider of the IM (or other) dialog based interactive protocol service.

Once an incoming connection from a client is accepted and a corresponding connection to an IM server is established, an exemplary embodiment of a method in accordance with the present invention relays the dialog protocol messages from one connection to the other. When the IM server connection is established, the present invention can also optionally provide additional services such as storing at least a portion of the dialog in a permanent store, encrypting at least a portion of the dialog (for subsequent decryption by, for example, another party to the dialog), and scanning at least a portion of the dialog for a virus and/or inappropriate content.

Before explaining at least some embodiments of the invention in detail, it is to be understood that the invention is not limited in its application to the details of construction and to the arrangements of the components set forth in the following description or illustrated in the drawings. The invention is capable of other embodiments and of being practiced and carried out in various ways.

### BRIEF DESCRIPTION OF THE DRAWINGS

The Detailed Description including the description of a preferred structure as embodying features of the invention will be best understood when read in reference to the accompanying figures wherein:
FIG. 1 is an exemplary representative simplified block diagram of a system of the present invention, which also illustrates an overview of the method according to the present invention;
FIG. 2 is an exemplary embodiment of a data structure that can be used to associate a unique ID of a user dialog with a socket;
FIG. 3A and 3B, taken together, is an exemplary embodiment of a data structure that can be used to associate authentication information with a unique identifier associated with a user dialog;
FIGs. 4A and 4B, taken together, is a flowchart of the operation of an embodiment of the authentication and authorization aspects of the present invention; and
FIGs. 5A and 5B, taken together, is a flowchart of the operation of an embodiment of the add-on services aspect of the present invention.

### DETAILED DESCRIPTION OF A PREFERREDEMBODIMENT OF THE INVENTION

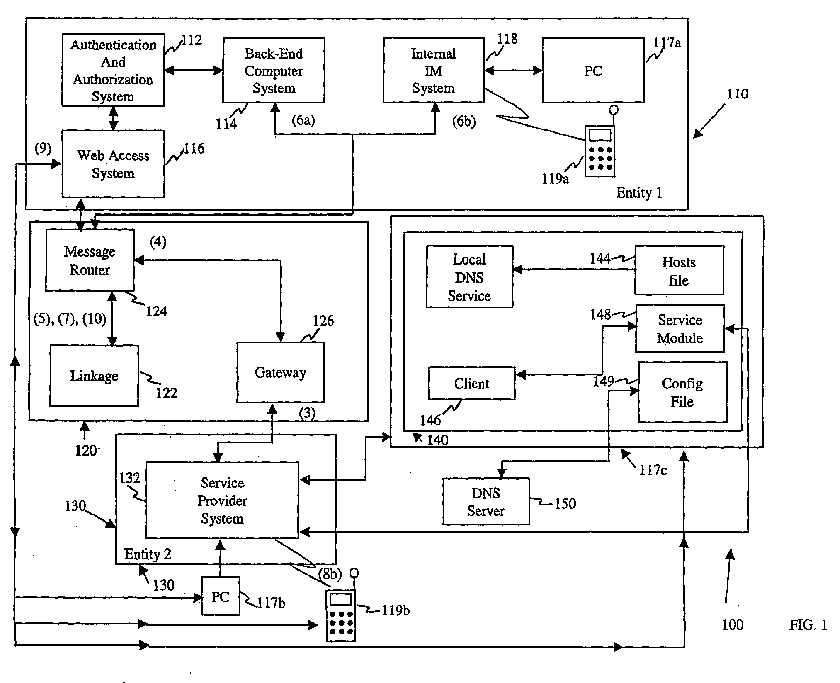

FIG. 1 is an exemplary embodiment of a system 100 and architecture for practicing a preferred embodiment of the present invention. The system 100, which in the exemplary embodiment shown in FIG. 1 consists of entity 1 (110), linkage module 120, entity 2 (130), and add-on module 140, can utilize a conventional network infrastucture (not shown) that enables the use of Instant Messaging (IM) communication protocols that enable or facilitate the transmission and display of messages on communication devices such as conventional personal computers (PCs) 117a, 117b, 117c and/or wireless devices 119a, 119b. Add-on module 140 can reside within PC 117c. Equivalent portions of add-on module can also reside on wireless devices 119a, 119b.

The system 100 enables a non-trusted user of a conventional PC 117b and/or wireless device 119b to authenticate, authorize and securely communicate with, for example, back-end computer system (BES) 114, IM system 118 and/or one or more users using devices such as a PC 117a and/or wireless device 119a utilizing a dialog based interactive protocol system (e.g., AOL Instant Messenger (AIM), Yahoo! Messenger, etc.) that is controlled and operated by non-trusted entity 2 (130) (e.g., service provider system 132). As used herein, entity 1 (110) and entity 2 (130) can represent companies, organizations, institutions, and the like. For example, entity 1 (110) can be a fmancial institution such as a bank, and entity 2 (130) can be an IM service provider (e.g., America Online Corporation, Microsoft Corporation, etc.). Further, service provider system 132 is a dialog based interactive system owned and operated by entity 2 (130), and is the system that can be used by the interactive user of PC 117b and/or wireless device 119b to have secure, authenticated, and authorized communications with entity 1 (110). Service provider system 132 maintains, for example, a database or directory, of presentities. An exemplary presentity is an electronic identity consisting of, for example, a name, a password, and a presence status. Presentities can be implemented by way of a data structure with individual fields for each of the respective name, password, and presence status elements. Further information pertaining to presentities is contained in the following Internet Engineering Task Force documents: 1) Request for Comment (RFC) 2778, dated February 2000, by M. Day et al., and entitled A Model for Presence and Instant Messaging*,* and 2) RFC 2779, dated February 2000, by M. Day et al., and entitled Instant Messaging / Presence Protocol Requirements*.* Copies of RFC 2778 and 2779 are submitted herewith and attached as appendices.

The network infrastructure can consist of the Public Switched Telephone Network (PSTN), the Internet and/or a wireless network. Other network infrastructure can also be utilized. For example, the system 100 may also include a long distance network (LDN) operatively connected to the PSTN, and a terminating local PSTN operatively connected to the LDN. Embodiments of the invention also contemplate connection of one or more of entity 1 (110), linkage module 120, entity 2 (130) and/or add-on module 140 via, for example, one or more suitable network interfaces (not shown).

Wireless devices 119a, 119b preferably utilize, for example, any suitable second (or higher) generation (2G) network protocols and/or technologies to connect to service provider system 132. For example, 2G wireless networks/technologies such as Global System for Mobile Communications (GSM), Time Division Multiple Access (TDMA), Integrated Dispatch Enhanced Network (IDEN) and/or Code Division Multiple Access (CDMA) can be utilized. Similarly, 2.5 generation networks/protocols such as General Packet Radio Service (GPRS) and/or CDMA 1x Radio Transmission Technology (1xRTT) can be utilized, as can third generation (3G) networks/protocols such as CDMA2000, Enhanced Data for GSM Evolution (EDGE) and/or Universal Mobile Telecommunications System (UMTS).

Entity 1 (110) includes authentication and authorization system (AAS) 112 which, in some embodiments, can authenticate users accessing entity 1 (110) and can store authorization information. Web access system (WAS) 116 provides a secure way (using, for example, HyperText Transport Protocol Secure (HTTPS) and/or Wireless Transport Layer Security (WTLS) for users to access the AAS 112 over the World Wide Web (WWW)).

Back-end computer system (BCS) 114 is a system that is controlled by and/or operates in conjunction with entity 1 (110). PC 117b and/or wireless device 119b can communicate with entity 1 (110) to facilitate an interactive dialog using, for example, an IM protocol to, for example, participate in, initiate, and/or conclude an automated process, and/or to obtain and/or disseminate information. Internal IM system 118 is a dialog based interactive protocol system (e.g., AIM, MSN Messenger) that is controlled by and/or associated with entity 1 (110). IM system 118 can be used by personnel of entity 1 (110) to engage in interactive dialogs with users of entity 1 (110) and/or entity 2 (130).

Within linkage module 120, message router 124 routes messages between itself and the following: linkage 122, gateway 126, WAS 116, BCS 114, and Internal IM system 118. In at least one embodiment, message router 124, linkage 122 and gateway 126 can be servers with software having the functionality described herein. More specifically, in an exemplary embodiment gateway 126 includes one or more software modules that can accept logical commands. Exemplary logical commands can be in the form of a message and/or a conventional call to a particular software function. In response to a logical command, gateway 126 can emit one or more messages formatted according to the rules of a particular dialog based interactive protocol. Message router 124 and linkage 122 can be similarly configured.

In an exemplary embodiment, message router 124 includes one or more software modules that allow the separation of dialog processing (performed by linkage 122) and connection and protocol maintenance (performed by gateway 126). Any number of gateway 126 servers and linkage 122 servers may be deployed. The use of message router 124 and one or more linkage and gateway servers can improve the scalability of the messaging capabilities of system 100. Message router 124 routes logical messages between the various systems, such as by using a unique ID in each message. The unique ID in each message allows message router 124 to identify the correct linkage 122, gateway 126 server or back-end system 114 to which to route the message.

In order to transmit and receive protocol messages, at least one embodiment of gateway 126 maintains a conventional Transmission Control Protocol (TCP) network connection for each established dialog. A conventional TCP connection can be represented by a socket, which is the combination of the Internet Protocol (IP) address (e.g., 192.168.1.1) of the station and a port number (up to 65535). Insofar as HTTP also uses TCP as a transport layer, the present invention also contemplates intercepting IM messages over the HTTP.

The well-known port numbers are the port numbers that are reserved for assignment by the Internet Corporation for Assigned Names and Numbers (ICANN) for use by the application end points that communicate using the TCP or the User Datagram Protocol (UDP). Each kind of application has a designated (and thus "well-known") port number. For example, HTTP has the port number of 80. The Post Office Protocol Version 3 (POP3) application, commonly used for e-mail access, has the port number of 110. When one application communicates with another application at another host computer on the Internet, it specifies that application in each data transmission by using its port number. The well-known ports cover the range of possible port numbers from 0 through 1023. Other registered ports are numbered from 1024 through 49151. The remaining ports, referred to as dynamic ports or private ports, are numbered from 49152 through 65535. MSN Messenger uses port 1863, Yahoo uses port 5050, and AIM uses ports 5190 and 5191.

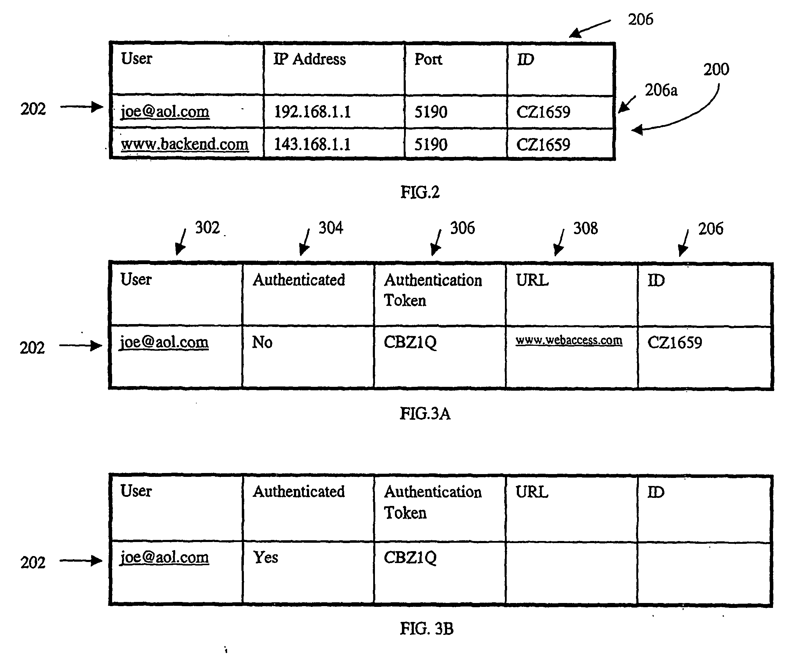

Gateway 126 maintains a data structure, called the context, representing the state of each connection, including the socket over which the dialog is being carried out. The context is preferably stored in random access memory (RAM) of gateway 126. An exemplary context between a first user 202 and a second user 204 is shown in FIG. 2, which also shows an exemplary embodiment of a data structure that can be used to associate a unique ID of a user dialog with a socket.

When gateway 126 receives a conventional invitation message (e.g., using the Send Chat Invitation icon, located on the AIM window below the Buddy List) to initiate or create a new dialog between two or more users, and/or when a logical request is made to gateway 126 to send an invitation, gateway 126 creates a unique ID 206 to represent the dialog or associates a unique ID with the dialog. Subsequently, any messages received belonging to the dialog are forwarded to message router 124 along with the unique ID. Similarly, any messages transmitted to gateway 126 from message router 124 with the unique ID are mapped to the context data structure and transmitted to the service provider system 132. Mapping from a unique ID to the context data structure can be done by, for example, a lookup table (e.g., a hash table).

Messages can be routed in a conventional manner based on, for example, fields in the message that indicate source and destination of the message. For purposes of scalability and/or redundancy, any of entity 1 (110), linkage module 120 and/or entity 2 (130) (or their respective components) can have multiple instances. Message router 124 selects the correct instance of the system and/or can perform load balancing across multiple instances, as appropriate.

Linkage 122 creates and maintains associations between a session of a user dialog, authentication information created when the user provides credentials to the WAS 116, and the authorized and trusted session with the BCS 114 and/or internal IM system 118. Gateway 126 interacts with a dialog based interactive protocol system owned and operated by a separate entity (e.g., entity 2 (130)) that is not trusted by entity 1 (110) for purposes of user authentication.

An exemplary embodiment of linkage 122 comprises one or more software modules. The functions of linkage 122 services can be invoked by, for example, transmitting conventional logical command messages to linkage 122. The services provided by linkage 122 are typically targeted at a particular dialog, as identified by the unique ID 206. A least one embodiment of linkage 122 maintains a data structure, known as the context, for each dialog that it is processing. For example, HTTP uses a context data structure HttpCtx to store the current state of a HTTP transaction.

FIGs. 3A and 3B, taken together, show an exemplary data structure that can be used by linkage 122 to determine whether a user (e.g., user 202) has been authenticated. In FIG. 3A, user 202 has not been authenticated; in FIG. 3B, user 202 has been authenticated.

More particularly, in FIG. 3A, when the user authentication service is invoked, linkage 122 checks the context (of the dialog) 300 to determine if user 202 has been authenticated (as indicated by field 304). Since user 202 has not been authenticated (as indicated by "No" in column 304 of FIG. 3A), linkage 122 preferably transmits a logical command to gateway 126 via message router 124 to send a message to user 202 to activate (e.g., by clicking on), for example, a particular web Uniform Resource Locator (URL) 308. The URL also has associated with it the ID 206 that is associated with the dialog (from FIG. 2).

The web URL points or directs user 202 to WAS 116, and contains, as a parameter, the unique ID 206 associated with the dialog. Upon receiving the message, user 202 can activate the URL that directed user 202 to WAS 116 web page, where user 202 can identify him/herself by, for example, providing the name (e.g., a username) and credentials (e.g., a password). Since access to a web page can be completely secured via means such as HTTPS, credentials can be provided to web access system 116 in a secure manner. Upon verifying user 202 credentials, WAS 116 can transmit a message to linkage 122 via message router 124, providing both the unique ID 206 that was passed as a parameter in the URL 308, and a token 306 identifying the now authenticated user 202 (shown in FIG. 3B at 304). Upon receiving this message, linkage 122 uses the unique ID 206 to locate the context data structure 200, and maintains the provided authentication token 306, as shown in FIG. 3B.

Some dialog based interactive protocols allow for the transmission of richly formatted text, typically in the form of HyperText Markup Language (HTML) or MIME (Multipurpose Internet Mail Extensions) HyperText Markup Language (MHTML) formatted text. In another embodiment of the invention, linkage 122 can transmit a HTML or MHTML page (not shown) that can be displayed to the user 117b, 119b (e.g., directly in the display PC 117b and wireless device 119b, respectively). The user of the device 117b, 119b can then provide the user name and credentials directly in the transmitted display. The filled out form can then be transmitted to WAS 116.

Regardless of whether the user transmits credentials to or enters credentials at WAS 116, the WAS 116 can send a conventional cookie back to the user's web browser (of, for example, PC 117b) containing the unique ID of the dialog. For security reasons, the unique ID within the cookie is preferably encrypted.

Another service provided by linkage 122 is the ability to securely transmit a message to an authenticated user. To do so, linkage 122 transmits to user (via a logical command to gateway 126) 117b and/or 119b a message containing a URL to a secure system containing the sensitive data. The data is only shown if the browser is able to reproduce the cookie that was given to it as part of the authentication process.

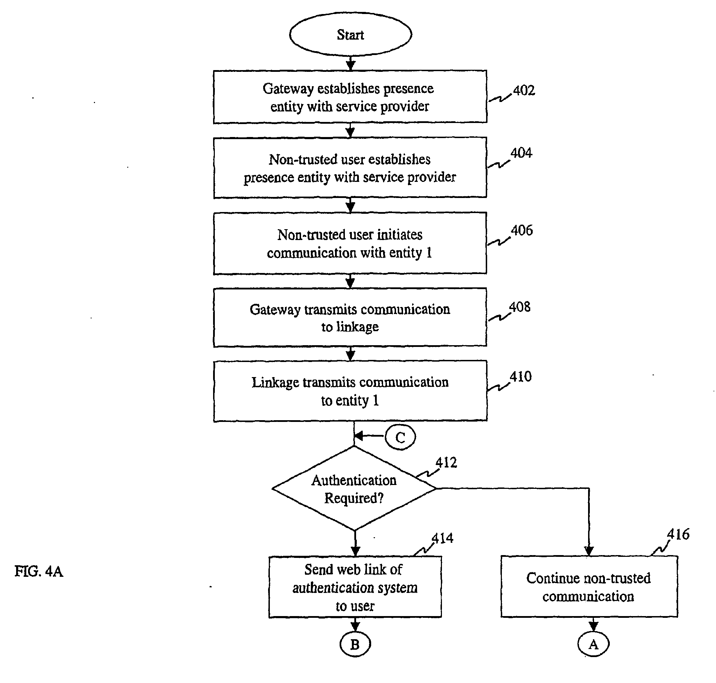

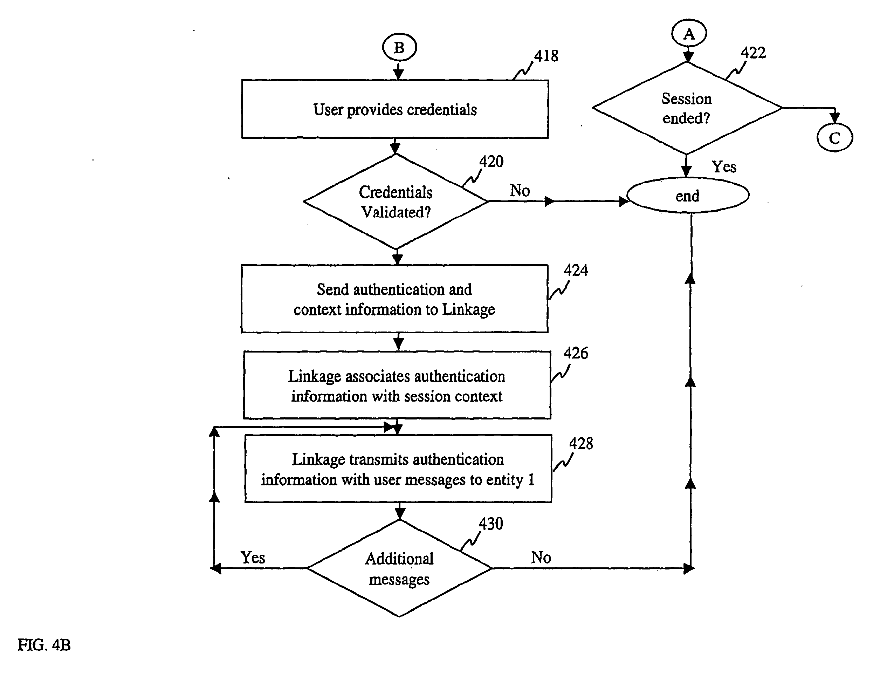

FIGs. 4A and 4B, taken together, is a flowchart of the operation of a preferred embodiment of the invention. With regard to FIGs. 4A and 4B, reference numerals corresponding to the flow of information in FIG. 1 are also provided in parentheses (e.g., (1)).

At step 402, gateway 126 initially establishes (1) a presentity (i.e., a presence entity that, for example, provides presence information to a presence service) with the service provider system 132 dialog based interactive system. A presentity is the entity whose presence information is tracked. A presentity preferably registers its status, location, and other attributes with the service provider system 132.

At step 404, an interactive user using, for example, a PC 117b and/or a wireless device 119b also establishes (2) a presentity with the service provider system 132 dialog based interactive system. At step 206, the user initiates (3) a communication with entity 1 (110), via the presentity established in step 402. At step 408, gateway 126 accepts the communication request and transmits (4) the communication to the message router 124 which, in turn, transmits (5) the message to linkage 122.

At step 410, linkage 122 examines the contents of the communication request and, if appropriate, optionally creates a new context (as discussed with regard to FIGs. 2 and 3) regarding, for example, the name and/or role or other properties or characteristics of the user making the request for the communication session. Linkage 122 may also optionally facilitate or provide, for example, communication without regard to the underlying protocol(s) and/or data format(s) used by entity 1 (110) and entity 2 (130). That is, gateway 126 and linkage 122 work together via message router 124 to facilitate communication regardless of the (same or different) IM protocol(s) being used by each of entity 1 (110) and entity 2 (130). Linkage will, as appropriate, transmit (6a, 6b) one or more messages to the BCS 114 or internal IM system 118 via message router 124.

At decision step 412 a determination is made whether entity 1 (110) wishes to authenticate the user of PC 117b and/or wireless device 119b. If it is determined at decision step 412 that authentication is required, a message is transmitted (7) to linkage 122 by BCS 114 or internal IM system using message router 124. At step 414, linkage 122 then transmits (8a, 8b) the Uniform Resource Locator (URL) of AAS 112 to the PC 117b and/or wireless device 119b, preferably using message router 124, gateway 126, and service provider system 132. The BCS 114 also preferably transmits instructions to access the transmitted URL and provide credentials. The URL also contains information about the context that was established for the session between the PC 117b or wireless device 119b and the respective back end computer system 114 or internal IM system 118.

At step 418, the user of PC 117b or wireless device 119b will then utilize the URL provided to access (9) WAS 116 and provide credentials. For securely communicating information to the interactive user, linkage can send a link to a secure Web site that contains the information, instead of sending the information directly over the interactive protocol session. Web access server 116 can use AAS 112 to validate user credentials, as discussed with regard to FIG. 1. If the user of PC 117b or wireless device 119b is authenticated then, at step 424, WAS 116 will assemble a message containing authentication information and the context information pulled from data transmitted (8a, 8b) along with the URL and transmit (10) the message to linkage 122 thru message router 124. If the credentials can not be validated at decision step 420, the session terminates.

At step 426, linkage 122 associates the authentication information with the context established for the dialog session, as discussed with regard to FIGs. 2 and 3. At step 428, future messages from linkage 122 to the back-end computer system 114 or internal IM system 118 will contain the authentication information from the context. This advantageously enables the back-end system 114 or internal IM system 118 to utilize the authentication information for authorizing requests made by the user of PC 117b or wireless device 119b. WAS 116 can also prompt the user of PC 117b and/or wireless device 119b to periodically re-authenticate him/herself. For example, if the user begins to withdraw a predetermined sum of money from an account using BCS 114, and a predetermined period of time has elapsed since a previous user response/input, WAS 116 can prompt the user to re-authenticate him/herself to ensure, for example, that another user is not using the account in an unauthorized manner. If at decision step 430 it is determined that no additional messages are transmitted, the session terminates. If additional messages are transmitted, the process returns to step 428.

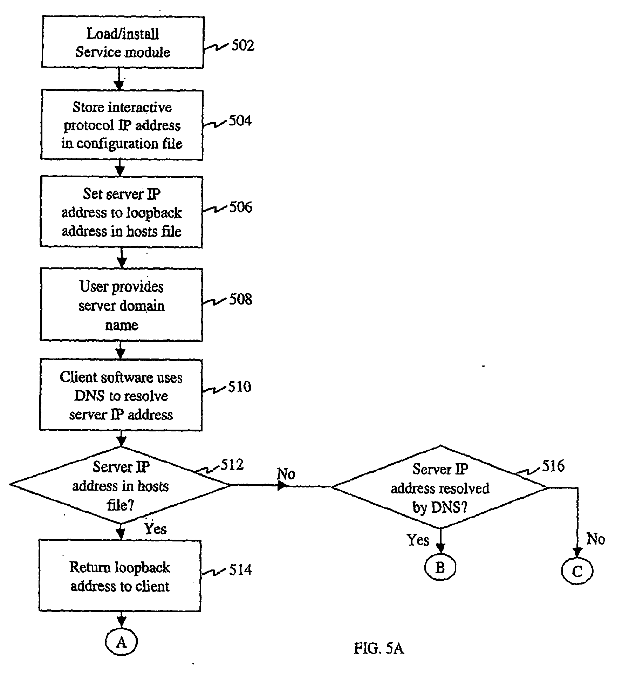

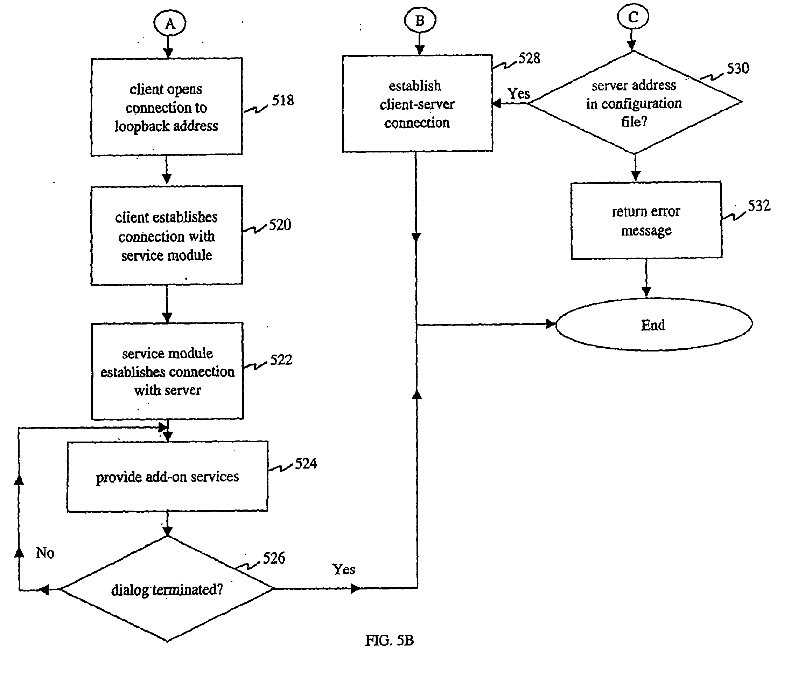

The elements shown in add-on module 140 illustrate how service module 148 can be transparently inserted into the TCP connection between a client 146 and the service provider system 132. In at least one embodiment, service module 148 can be installed from, for example, a local drive of a PC and/or downloaded from the web. Service module 148 performs functions such as, for example, encrypting at least a portion of the dialog, recording (e.g., storing) at least a portion of the dialog in a permanent store (e.g., a conventional hard disk and/or CD-ROM, as shown in FIG. 5), and/or scanning at least a portion of the dialog for inappropriate content using, for example, natural language techniques.

The IP address of the service provider system 132 is preferably resolved using a DNS server 150 and optional local Domain Name Service (DNS) server 142. The resulting IP address can be recorded in a configuration file 149.

Service module 148 also causes an entry for the service provider system 132 to be made in the conventionally used hosts file 144 of PC 117b (or device 119b), and records the loopback address (e.g., 127.0.0.1) as the address of the service provider system 132. Hosts file 144 is a conventional text file on PC 117b (or wireless device 119b) that contains a mapping or association of IP addressees to host names.

When a hosts file 144 is used (e.g., in the C:\Windows folder), the PC 117b (or wireless device 119b) will first check, for example, C:\Windows for the numerical IP address (e.g., 127.0.0.1) associated with an alphanumeric reference (e.g., www.serviceprovider.com). Unix based systems and wireless devices 119b use a hosts file in a similar manner.

Service module 148 receives and accepts incoming connections to the particular ports that the client 146 and service provider system 132 use. When service module 148 is invoked or activated, it first uses the services of the local DNS service 142 and DNS server 150 in a conventional manner to resolve (e.g., map) the alphanumeric name of the service provider system 132 to an IP address. The alphanumeric name of the service provider system 132 is typically pre-configured into the client 146 software provider by the service provider system 132.

The local DNS service 142 accesses the hosts file 144 on PC 117b (or wireless device 119b) to determine if there is an entry for the service provider system 132 server name (at least one embodiment of service provider system 132 comprises one or more servers). Since the entry for the service provider system 132 server was previously recorded as being the loopback address (i.e., 127.0.0.1) as described above, the loopback address is returned to client 146. Client 146 then opens a TCP connection to the loopback address, and establishes a connection to service module 148. If there is not an alphanumeric reference in the hosts file 144 as typed in a browser, then the local DNS service 142 and DNS server 150 determine the corresponding IP address on the entered alphanumeric reference, preferably in a conventional manner.

In response to the incoming client connection, service module 148, in turn, opens a TCP connection to service provider system 132 server. Service module 148 can determine the IP address of service provider system 132 server in at least two ways. First, service module 148 can instruct local DNS service 142 and DNS server 150 to not consult hosts file 144. Service module 148 then uses DNS server 150 in a conventional manner to execute the DNS protocol to resolve (e.g., map) the alphanumeric name of the service provider system 132 server name to its IP address. Second, service module 148 can read the IP address of the service provider system 132 server from the configuration file created at installation time.

Once a TCP connection to service provider system 132 server is established, dialog protocol traffic from the client 146 is relayed to the service provider system 132 server. Similarly, protocol traffic from the service provider system 132 server is transmitted to the client 146. Service module 148 can optionally modify at least a portion of the dialog protocol traffic, in order to provide add-on services such as, for example, encrypting at least a portion of the dialog, storing at least a portion of the dialog in a permanent store (e.g., a conventional hard drive and/or CD-ROM), and/or scanning at least a portion of the dialog for inappropriate content. Such add-on services can be provided by service provider system 132 (e.g., AOL/AIM, MSN, Yahoo! Messenger), or by a third party using add-on module 140.

In addition, once a TCP connection is established between service module 148 and service provider system 132 server, protocol messages can be exchanged between the client 146 and the service provider system 132 server to, for example, establish the identity of the user of the client 146 software, publish the availability of the user for engaging in dialogs, and/or for retrieve the availability of a set of other users (e.g., a Buddy List).

Further, once a user is logged in and user availability is published, the service provider system 132 server can retrieve a list of other users that have announced an interest in the status of the user. If these other users are also connected to the service provider system 132 server, then the status of the newly logged in user is specified to these other users.

If a dialog is established with another user that user a service module 148 (or similar software), then the respective service modules 148 (on each of, for example, PCs 117a, 117b and/or PCs 117b, 117c) can, for example, perform functions such as encrypting/decrypting at least a portion of exchanged dialog traffic, thereby providing a substantially secure communication channel between the two PCs.

FIGs. 5A and 5B, taken together, is a flowchart of the operation of a preferred embodiment of the add-on services aspect of the present invention. At step 502, service module 148 is installed in a conventional manner. Service module 148 can be installed on a PC 117c by, for example, using a hard drive (not shown) or CD-ROM (not shown) of the PC 117c, and/or by downloading service module 148 using a network connection.

At step 504, the IP address of the service provider system 132 is preferably resolved using, for example, a DNS server 150 and optional local DNS server 142. The resulting service provider system 132 server IP address can be recorded in a configuration file associated with PC 117c. In a preferred embodiment, the name of the service provider system 132 server (e.g., www.serviceprovider.com) is pre-configured into the client 146 software.

At step 506, service module 148 sets the service provider system 132 server IP address to be the loopback address (currently 127.0.0.1), and writes this to hosts file 144. On Windows-based PCs 117c, the hosts file 144 can be located in the C:\Windows folder. At step 508, a user inserts (e.g., types) the service provider system 132 server name into a conventional web browser.

At decision step 512, service module 148 determines whether the hosts file 144 contains the name of service provider system 132 server, and whether service provider system 132 server has an associated IP address. Since the service provider system 132 server address was set to the loopback address at step 506, a preferred embodiment of service module 148 returns the loopback address to client 146 at step 514.

At step 518, client 146 establishes a TCP connection to the loopback address and, at step 520, further establishes a connection with service module 148. At step 522, service module 522 then establishes a connection with service provider system 132 server.

At step 524, service module 148 mediates between client 146 and service provider system 132 server and provides add-on services such as encrypting at least a portion of the dialog, storing at least a portion of the dialog in a permanent store (e.g., a conventional hard drive and/or CD-ROM), and/or scanning at least a portion of the dialog for inappropriate content.

At decision step 526, a determination is made whether the dialog has been terminated. If the dialog has not been terminated, the dialog continues and additional add-on services can be provided at step 524. If the dialog has been terminated, the process ends.

If at decision step 512, service module 148 determines, for example, that hosts file 144 does not contain the name of service provider system 132 server, and/or service provider system 132 server does not have an associated IP address in hosts file 144, then, at decision step 516, a determination is made whether the IP address of service provider system 132 server has been resolved by DNS server 150, optionally in conjunction with local DNS service 142. It should be understood that although the IP address of service provider system 132 server was set to the loopback address in step 506, the loopback address and/or alphanumeric name of service provider system 132 server may not be accessible in hosts file 144 for a variety of reasons. For example, hosts file 144 may have been corrupted and/or modified since step 506 was last performed, thereby rendering the loopback address associated with service provider system 132 server and/or the alphanumeric name of the service provider system 132 server inaccessible.

If at decision step 516 the local DNS service 142 and/or DNS server 150 resolves the IP address of service provider system 132 server, then at step 528 a client-server connection between client 146 and service provider system 132 server is established. If at decision step 516 the local DNS service 142 and/or DNS server 150 can not resolve the IP address of service provider system 132 server, then, at decision step 530 a determination is made whether the service provider system 132 server resides in a configuration file of PC 117c (or, e.g., wireless device 119a). If service module 148 can obtain the IP address of service provider system 132 server from a configuration file, then a client-server connection between client 146 and service provider system 132 server is established at 528 as discussed above. If at decision step 530 service module 148 determines that the IP address of service provider system 132 server can not be read from a configuration file, then service module 148 returns an error message to, for example, the browser of PC 117c (or, e.g., wireless device 119a).

At step 528, the client server-connection can include such functions as, for example, establishing the identify of the user of the client 146 software, publishing the availability of the user for engaging in dialogs, and/or retrieving the availability of a set of other users (e.g., a Buddy List) that the user may be interested in engaging in a dialog with. In addition, once a user is logged in to the service provider system 132 and announces his status, the server system can retrieve a list of other users that have announced an interest in the status of the user. If the other users are also connected to the service provider system 132 server, then the service provider system 132 preferably provides the status of the newly logged in user to the other users.

### APPENDIX A

| | |
|---|---|
| Network Working Group | M. Day |
| Request for Comments: 2778 | Lotus |
| Category: Informational | J. Rosenberg |
| | dynamicsoft |
| | H. Sugano |
| | Fujitsu |
| | February 2000 |

### A Model for Presence and Instant Messaging

### Status of this Memo

This memo provides information for the Internet community. It does not specify an Internet standard of any kind. Distribution of this memo is unlimited.

### Copyright Notice

Copyright (C) The Internet Society (2000). All Rights Reserved.

### Abstract

This document defines an abstract model for a presence and instant messaging system. It defines the various entities involved, defines terminology, and outlines the services provided by the system. The goal is to provide a common vocabulary for further work on requirements for protocols and markup for presence and instant messaging.

### 1. Introduction

A presence and instant messaging system allows users to subscribe to each other and be notified of changes in state, and for users to send each other short instant messages. To facilitate development of a suite of protocols to provide this service, we believe that it is valuable to first develop a model for the system. The model consists of the various entities involved, descriptions of the basic functions they provide, and most importantly, definition of a vocabulary which can be used to facilitate discussion.

We note that the purpose of this model is to be descriptive and universal: we want the model to map reasonably onto all of the systems that are informally described as presence or instant messaging systems. The model is not intended to be prescriptive or achieve interoperability: an element that appears in the model will not necessarily be an element of an interoperable protocol, and may not even be a good idea.

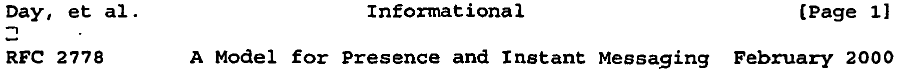

In this document, each element of the model appears in upper case (e.g., PRESENCE SERVICE). No term in lower case or mixed case is intended to be a term of the model.

The first part of this document is intended as an overview 6. the model. The overview includes diagrams, and terms are presented in an order that is intended to help the reader understand the relationship between elements. The second part of the document is the actual definition of the model, with terms presented in alphabetical order for ease of reference.

The overview is intended to be helpful but is not definitive; it may contain inadvertent differences from the definitions in the model. For any such difference, the definition(s) in the model are taken to be correct, rather than the explanation(s) in the overview.

### 2. Overview

The model is intended to provide a means for understanding, comparing, and describing systems that support the services typically referred to as presence and instant messaging. It consists of a number of named entities that appear, in some form, in existing systems. No actual implementation is likely to have every entity of the model as a distinct part. Instead, there will almost always be parts of the implementation that embody two or more entities of the model. However, different implementations may combine entities in different ways.

The model defines two services: a PRESENCE SERVICE and an INSTANT MESSAGE SERVICE. The PRESENCE SERVICE serves to accept information, store it, and distribute it. The information stored is (unsurprisingly) PRESENCE INFORMATION. The INSTANT MESSAGE SERVICE serves to accept and deliver INSTANT MESSAGES to INSTANT INBOXES.

### 2.1 PRESENCE SERVICE

The PRESENCE SERVICE has two distinct sets of "clients" (remember, these may be combined in an implementation, but treated separately in the model). One set of clients, called PRESENTITIES, provides PRESENCE INFORMATION to be stored and distributed. The other set of clients, called WATCHERS, receives PRESENCE INFORMATION from the service.

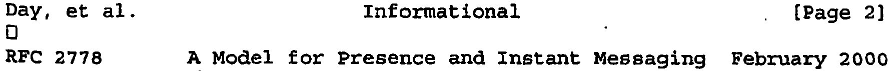

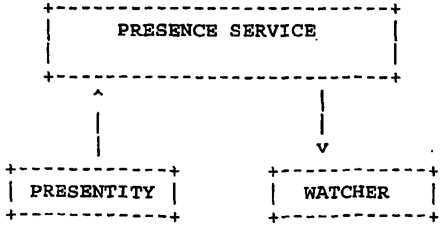

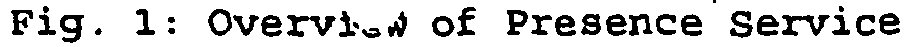

There are two kinds of WATCHERS, called FETCHERS and SUBSCRIBERS. A FETCHER simply requests the current value of some PRESENTITY's PRESENCE INFORMATION from the PRESENCE SERVICE. In contrast, a SUBSCRIBER requests notification from the PRESENCE SERVICE of (future) changes in some PRESENTITY's PRESENCE INFORMATION. A special kind of FETCHER is one that fetches information on a regular basis. This is called a POLLER.

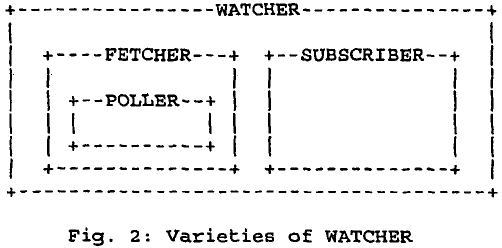

The PRESENCE SERVICE also has WATCHER INFORMATION about WATCHERS and their activities in terms of fetching or subscribing to PRESENCE INFORMATION. The PRESENCE SERVICE may also distribute WATCHER INFORMATION to some WATCHERS, using the same mechanisms that are available for distributing PRESENCE INFORMATION.

Changes to PRESENCE INFORMATION are distributed to SUBSCRIBERS via . NOTIFICATIONS. Figures 3a through 3c show the flow of information as a piece of PRESENCE INFORMATION is changed from P1 to P2.

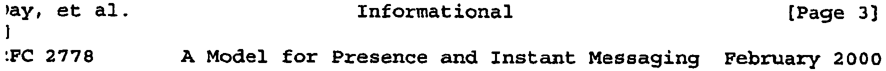

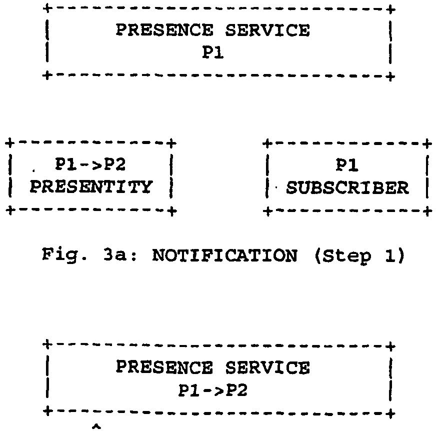

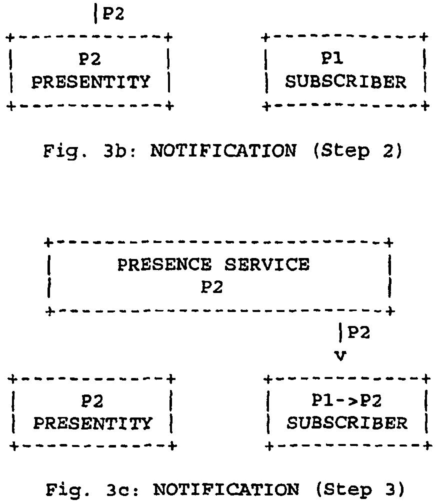

### 2.2 INSTANT MESSAGE SERVICE

The INSTANT MESSAGE SERVICE also has two distinct sets of "clients": SENDERS and INSTANT INBOXES. A SENDER provides INSTANT MESSAGES to the INSTANT MESSAGE SERVICE for delivery. Each INSTANT MESSAGE is 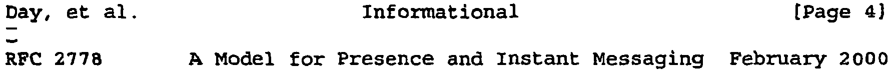 addressed to a particular INSTANT INBOX ADDRESS, and the INSTANT MESSAGE SERVICE attempts to deliver the message to a corresponding INSTANT INBOX.

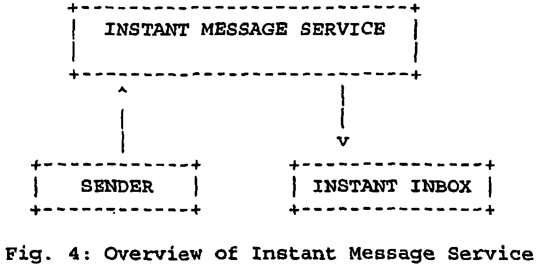

### 2.3 Protocols

A PRESENCE PROTOCOL defines the interaction between PRESENCE SERVICE, PRESENTITIES, and WATCHERS. PRESENCE INFORMATION is carried by the PRESENCE PROTOCOL.

An INSTANT MESSAGE PROTOCOL defines the interaction between INSTANT MESSAGE SERVICE, SENDERS, and INSTANT INBOXES. INSTANT MESSAGES are carried by the INSTANT MESSAGE PROTOCOL.

In terms of this model, we believe that the IMPP working group is planning to develop detailed requirements and specifications for the structure and formats of the PRESENCE PROTOCOL, PRESENCE INFORMATION, INSTANT MESSAGE PROTOCOL, and INSTANT MESSAGES.

### 2.4 Formats

The model defines the PRESENCE INFORMATION to consist of an arbitrary number of elements, called PRESENCE TUPLES. Each such element consists of a STATUS marker (which might convey information such as online/offline/busy/away/do not disturb), an optional COMMUNICATION ADDRESS, and optional OTHER PRESENCE MARKUP. A COMMUNICATION ADDRESS includes a COMMUNICATION MEANS and a CONTACT ADDRESS. One type of COMMUNICATION MEANS, and the only one defined by this model, is INSTANT MESSAGE SERVICE. One type of CONTACT ADDRESS, and the only one defined by this model, is INSTANT INBOX ADDRESS. However, other possibilities exist: a COMMUNICATION MEANS might indicate some form of telephony, for example, with the corresponding CONTACT ADDRESS containing a telephone number.

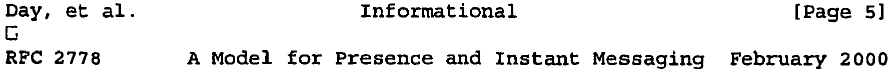

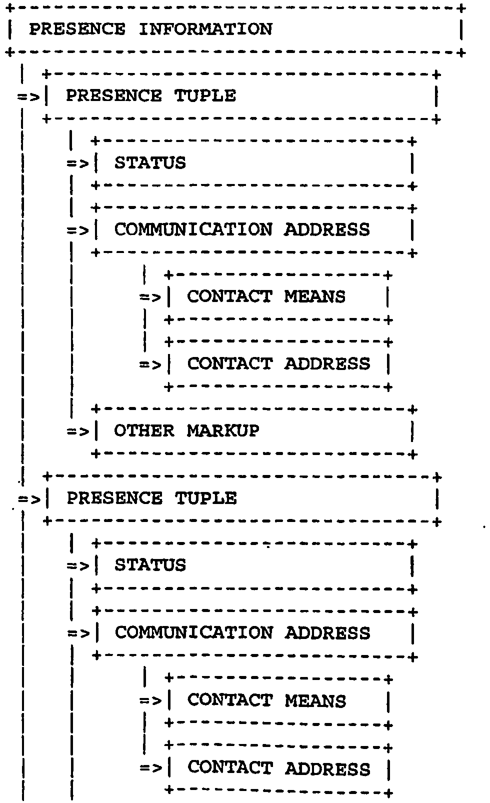

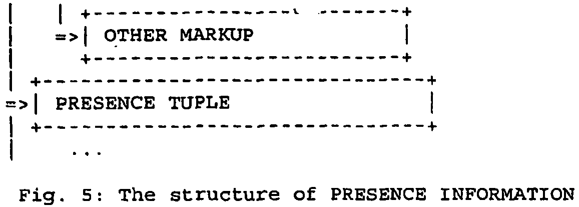

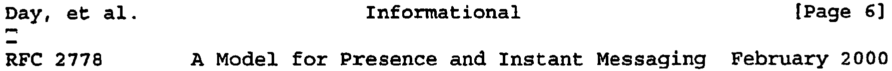

STATUS is further defined by the model to have at least two states that interact with INSTANT MESSAGE delivery -- OPEN, in which INSTANT MESSAGES will be accepted, and CLOSED, in which INSTANT MESSAGES will not be accepted. OPEN and CLOSED may also be applicable to other COMMUNICATION MEANS -- OPEN mapping to some state meaning "available" or "open for business" while CLOSED means "unavailable" or "closed to business." The model allows STATUS to include other values, which may be interpretable by programs or only by persons. The model also allows STATUS to consist of single or multiple values.

### 2.5 Presence and its effect on Instant Messages

An INSTANT INBOX is a receptacle for INSTANT MESSAGES. Its INSTANT INBOX ADDRESS is the information that can be included in PRESENCE INFORMATION to define how an INSTANT MESSAGE should be delivered to that INSTANT INBOX. As noted above, certain values of the STATUS marker indicate whether INSTANT MESSAGES will be accepted at the INSTANT INBOX. The model does not otherwise constrain the delivery mechanism or format for instant messages. Reasonable people can disagree about whether this omission is a strength or a weakness of this model.

### 2.6 PRINCIPALS and their agents

This model includes other elements that are useful in characterizing how the protocol and markup work. PRINCIPALS are the people, groups, and/or software in the "real world" outside the system that use the system as a means of coordination and communication. It is entirely outside the model how the real world maps onto PRINCIPALS -- the system of model entities knows only that two distinct PRINCIPALS are distinct, and two identical PRINCIPALS are identical.

A PRINCIPAL interacts with the system via one of several user agents (INBOX USER AGENT; SENDER USER AGENT; PRESENCE USER AGENT; WATCHER USER AGENT). As usual, the different kinds of user agents are split apart in this model even though most implementations will combine at least some of them. A user agent is purely coupling between a PRINCIPAL and some core entity of the system (respectively, INSTANT INBOX; SENDER; PRESENTITY; WATCHER).

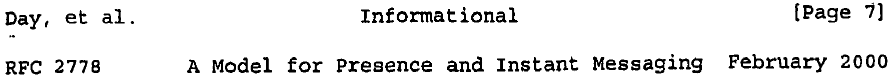

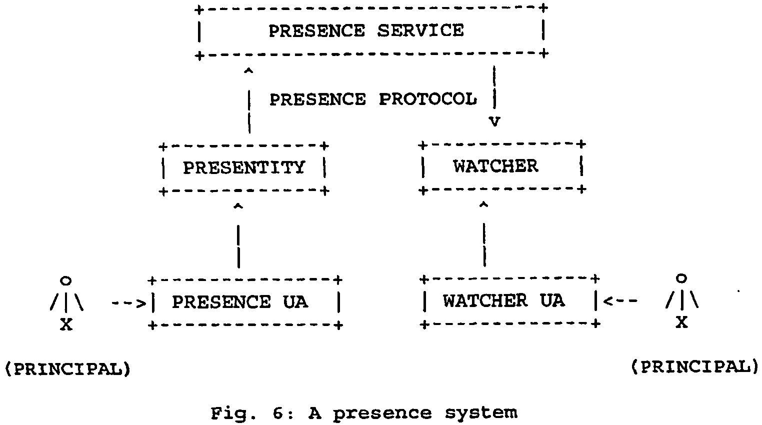

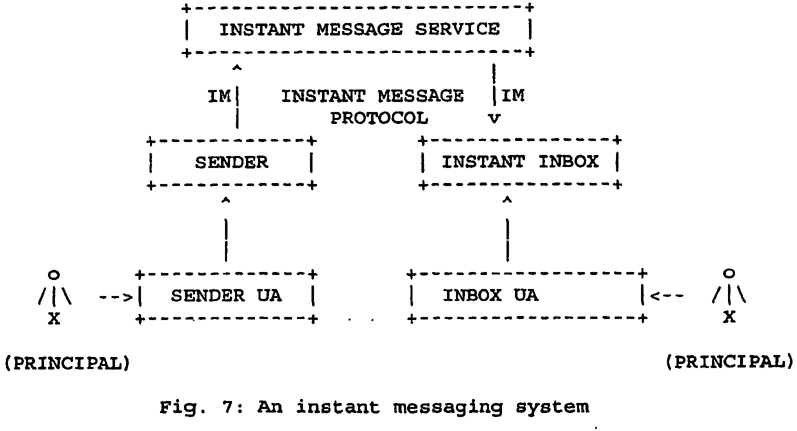

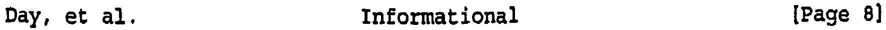

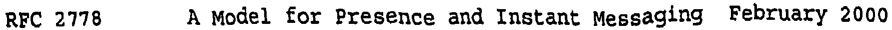

### 2.7 Examples

A simple example of applying the model is to describe a generic "buddy list" application. These applications typically expose the user's presence to others, and make it possible to see the presence of others. So we could describe a buddy list as the combination of a PRESENCE USER AGENT and WATCHER USER AGENT for a single PRINCIPAL, using a single PRESENTITY and a single SUBSCRIBER.

We could then extend our example to instant messaging and describe a generic "instant messenger" as essentially a buddy list with additional capabilities for sending and receiving instant messages. So an instant messenger would be the combination of a PRESENCE USER AGENT, WATCHER USER AGENT, INBOX USER AGENT, and SENDER USER AGENT for a single PRINCIPAL, using a single PRESENTITY, single SUBSCRIBER, and single INSTANT INBOX, with the PRESENTITY's PRESENCE INFORMATION including an INSTANT INBOX ADDRESS that leads to the INSTANT INBOX.

### 3. Model

ACCESS RULES: constraints on how a PRESENCE SERVICE makes PRESENCE INFORMATION available to WATCHERS. For each PRESENTITY's PRESENCE INFORMATION, the applicable ACCESS RULES are manipulated by the PRESENCE USER AGENT of a PRINCIPAL that controls the PRESENTITY.

Motivation: We need some way of talking about hiding presence information from people.

CLOSED: a distinguished value of the STATUS marker. In the context of INSTANT MESSAGES, this value means that the associated INSTANT INBOX ADDRESS, if any, corresponds to an INSTANT INBOX that is unable to accept an INSTANT MESSAGE. This value may have an analogous meaning for other COMMUNICATION MEANS, but any such meaning is not defined by this model. Contrast with OPEN.

COMMUNICATION ADDRESS: consists of COMMUNICATION MEANS and CONTACT ADDRESS.

COMMUNICATION MEANS: indicates a method whereby communication can take place. INSTANT MESSAGE SERVICE is one example of a COMMUNICATION MEANS.

CONTACT ADDRESS: a specific point of contact via some COMMUNICATION MEANS. When using an INSTANT MESSAGE SERVICE, the CONTACT ADDRESS is an INSTANT INBOX ADDRESS.

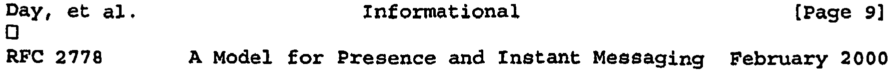

DELIVERY RULES: constraints on how an INSTANT MESSAGE SERVICE delivers received INSTANT MESSAGES to INSTANT INBOXES. For each INSTANT INBOX, the applicable DELIVERY RULES are manipulated by the INBOX USER AGENT of a PRINCIPAL that controls the INSTANT INBOX.

Motivation: We need a way of talking about filtering instant messages.

FETCHER: a form of WATCHER that has asked the PRESENCE SERVICE to for the PRESENCE INFORMATION of one or more PRESENTITIES, but has not asked for a SUBSCRIPTION to be created.

INBOX USER AGENT: means for a PRINCIPAL to manipulate zero or more INSTANT INBOXES controlled by that PRINCIPAL.

Motivation: This is intended to isolate the core functionality of an INSTANT INBOX from how it might appear to be manipulated by a product. This manipulation includes fetching messages, deleting messages, and setting DELIVERY RULES. We deliberately take no position on whether the INBOX USER AGENT, INSTANT INBOX, and INSTANT MESSAGE SERVICE are colocated or distributed across machines.

INSTANT INBOX: receptacle for INSTANT MESSAGES intended to be read by the INSTANT INBOX's PRINCIPAL.

INSTANT INBOX ADDRESS: indicates whether and how the PRESENTITY's PRINCIPAL can receive an INSTANT MESSAGE in an INSTANT INBOX. The STATUS and INSTANT INBOX ADDRESS information are sufficient to determine whether the PRINCIPAL appears ready to accept the INSTANT MESSAGE.

Motivation: The definition is pretty loose about exactly how any of this works, even leaving open the possibility of reusing parts of the email infrastructure for instant messaging.

INSTANT MESSAGE: an identifiable unit of data, of small size, to be sent to an INSTANT INBOX.

Motivation: We do not define "small" but we seek in this definition to avoid the possibility of transporting an arbitrary-length stream labelled as an "instant message."

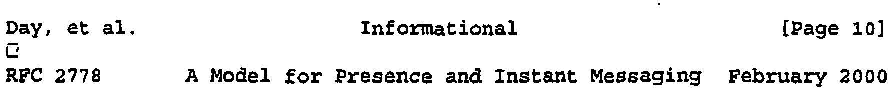

INSTANT MESSAGE PROTOCOL: The messages that can be exchanged between a SENDER USER AGENT and an INSTANT MESSAGE SERVICE, or between an INSTANT MESSAGE SERVICE and an INSTANT INBOX.

INSTANT MESSAGE SERVICE: accepts and delivers INSTANT MESSAGES.
-- May require authentication of SENDER USER AGENTS and/or INSTANT INBOXES.
-- May have different authentication requirements for different INSTANT INBOXES, and may also have different authentication requirements for different INSTANT INBOXES controlled by a single PRINCIPAL.
-- May have an internal structure involving multiple SERVERS and/or PROXIES. There may be complex patterns of redirection and/or proxying while retaining logical connectivity to a single INSTANT MESSAGE SERVICE. Note that an INSTANT MESSAGE SERVICE does not require having a distinct SERVER -- the service may be implemented as direct communication between SENDER and INSTANT INBOX.
-- May have an internal structure involving other INSTANT MESSAGE SERVICES, which may be independently accessible in their own right as well as being reachable through the initial INSTANT MESSAGE SERVICE.

NOTIFICATION: a message sent from the PRESENCE SERVICE to a SUBSCRIBER when there is a change in the PRESENCE INFORMATION of some PRESENTITY of interest, as recorded in one or more SUBSCRIPTIONS.

Motivation: We deliberately take no position on what part of the changed information is included in a NOTIFICATION.

OPEN: a distinguished value of the STATUS marker. In the context of INSTANT MESSAGES, this value means that the associated INSTANT INBOX ADDRESS, if any, corresponds to an INSTANT INBOX that is ready to accept an INSTANT MESSAGE. This value may have an analogous meaning for other COMMUNICATION MEANS, but any such meaning is not defined by this model. Contrast with CLOSED.

OTHER PRESENCE MARKUP: any additional information included in the PRESENCE INFORMATION of a PRESENTITY. The model does not define this further.

POLLER: a FETCHER that requests PRESENCE INFORMATION on a regular basis.

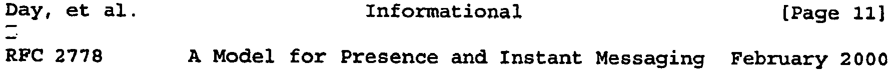

PRESENCE INFORMATION: consists of one or more PRESENCE TUPLES.

PRESENCE PROTOCOL: The messages that can be exchanged between a PRESENTITY and a PRESENCE SERVICE, or a WATCHER and a PRESENCE SERVICE.

PRESENCE SERVICE: accepts, stores, and distributes PRESENCE INFORMATION.
-- May require authentication of PRESENTITIES, and/or WATCHERS.
-- May have different authentication requirements for different PRESENTITIES.
-- May have different authentication requirements for different WATCHERS, and may also have different authentication requirements for different PRESENTITIES being watched by a single WATCHER.
-- May have an internal structure involving multiple SERVERS and/or PROXIES. There may be complex patterns of redirection and/or proxying while retaining logical connectivity to a single PRESENCE SERVICE. Note that a PRESENCE SERVICE does not require having a distinct SERVER -- the service may be implemented as direct communication among PRESENTITY and WATCHERS.
-- May have an internal structure involving other PRESENCE SERVICES, which may be independently accessible in their own right as well as being reachable through the initial PRESENCE SERVICE.

PRESENCE TUPLE: consists of a STATUS, an optional COMMUNICATION ADDRESS, and optional OTHER PRESENCE MARKUP.

PRESENCE USER AGENT: means for a PRINCIPAL to manipulate zero or more PRESENTITIES.

Motivation: This is essentially a "model/view" distinction: the PRESENTITY is the model of the presence being exposed, and is independent of its manifestation in any user interface. In addition, we deliberately take no position on how the PRESENCE USER AGENT, PRESENTITY, and PRESENCE SERVICE are colocated or distributed across machines.

PRESENTITY (presence entity): provides PRESENCE INFORMATION to a PRESENCE SERVICE.

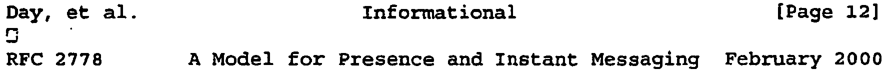

Motivation: We don't like to coin new words, but "presentity" seemed worthwhile so as to have an unambiguous term for the entity of interest to a presence service. Note that the presentity is not (usually) located in the presence service: the presence service only has a recent version of the presentity's presence information. The presentity initiates changes in the presence information to be distributed by the presence service.

PRINCIPAL: human, program, or collection of humans and/or programs that chooses to appear to the PRESENCE SERVICE as a single actor, distinct from all other PRINCIPALS.

Motivation: We need a clear notion of the actors outside the system. "Principal" seems as good a term as any.

PROXY: a SERVER that communicates PRESENCE INFORMATION, INSTANT MESSAGES, SUBSCRIPTIONS and/or NOTIFICATIONS to another SERVER. Sometimes a PROXY acts on behalf of a PRESENTITY, WATCHER, or INSTANT INBOX.

SENDER: source of INSTANT MESSAGES to be delivered by the INSTANT MESSAGE SERVICE.

SENDER USER AGENT: means for a PRINCIPAL to manipulate zero or more SENDERS.

SERVER: an indivisible unit of a PRESENCE SERVICE or INSTANT MESSAGE SERVICE.

SPAM: unwanted INSTANT MESSAGES.

SPOOFING: a PRINCIPAL improperly imitating another PRINCIPAL.

STALKING: using PRESENCE INFORMATION to infer the whereabouts of a PRINCIPAL, especially for malicious or illegal purposes.

STATUS: a distinguished part of the PRESENCE INFORMATION of a PRESENTITY. STATUS has at least the mutually-exclusive values OPEN and CLOSED, which have meaning for the acceptance of INSTANT MESSAGES, and may have meaning for other COMMUNICATION MEANS. There may be other values of STATUS that do not imply anything about INSTANT MESSAGE acceptance. These other values of STATUS may be combined with OPEN and CLOSED or they may be mutually-exclusive with those values.

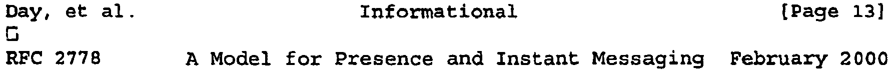

Some implementations may combine STATUS with other entities. For example, an implementation might make an INSTANT INBOX ADDRESS visible only when the INSTANT INBOX can accept an INSTANT MESSAGE. Then, the existence of an INSTANT INBOX ADDRESS implies OPEN, while its absence implies CLOSED.

SUBSCRIBER: a form of WATCHER that has asked the PRESENCE SERVICE to notify it immediately of changes in the PRESENCE INFORMATION of one or more PRESENTITIES.

SUBSCRIPTION: the information kept by the PRESENCE SERVICE about a SUBSCRIBER's request to be notified of changes in the PRESENCE INFORMATION of one or more PRESENTITIES.

VISIBILITY RULES: constraints on how a PRESENCE SERVICE makes WATCHER INFORMATION available to WATCHERS. For each WATCHER's WATCHER INFORMATION, the applicable VISIBILITY RULES are manipulated by the WATCHER USER AGENT of a PRINCIPAL that controls the WATCHER.

Motivation: We need a way of talking about hiding watcher information from people.

WATCHER: requests PRESENCE INFORMATION about a PRESENTITY, or WATCHER INFORMATION about a WATCHER, from the PRESENCE SERVICE. Special types of WATCHER are FETCHER, POLLER, and SUBSCRIBER.

WATCHER INFORMATION: information about WATCHERS that have received PRESENCE INFORMATION about a particular PRESENTITY within a particular recent span of time. WATCHER INFORMATION is maintained by the PRESENCE SERVICE, which may choose to present it in the same form as PRESENCE INFORMATION; that is, the service may choose to make WATCHERS look like a special form of PRESENTITY.

Motivation: If a PRESENTITY wants to know who knows about it, it is not enough to examine only information about SUBSCRIPTIONS. A WATCHER might repeatedly fetch information without ever subscribing. Alternately, a WATCHER might repeatedly subscribe, then cancel the SUBSCRIPTION. Such WATCHERS should be visible to the PRESENTITY if the PRESENCE SERVICE offers WATCHER INFORMATION, but will not be appropriately visible if the WATCHER INFORMATION includes only SUBSCRIPTIONS.

WATCHER USER AGENT: means for a PRINCIPAL to manipulate zero or more WATCHERS controlled by that PRINCIPAL.

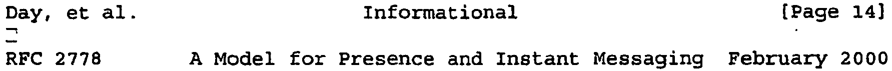

Motivation: As with PRESENCE USER AGENT and PRESENTITY, the distinction here is intended to isolate the core functionality of a WATCHER from how it might appear to be manipulated by a product. As previously, we deliberately take no position on whether the WATCHER USER AGENT, WATCHER, and PRESENCE SERVICE are colocated or distributed across machines.

### 4. Security Considerations

This document provides a model and vocabulary for systems with certain intrinsic security issues. In particular, presence and instant messaging systems must deal with "the three S's": STALKING, SPOOFING, and SPAM. ACCESS RULES, VISIBILITY RULES, and WATCHER INFORMATION are intended to deal with STALKING. The several kinds of authentication mentioned for INSTANT MESSAGE SERVICE and PRESENCE SERVICE are intended to deal with SPOOFING. DELIVERY RULES are intended to deal with SPAM.

### 5. Conclusion

This document has provided a model for a presence and instant messaging system. The purpose of the model is to provide a common vocabulary for the further work of defining and implementing interoperable presence and instant messaging protocols.

### 6. Acknowledgements

This document has been improved by comments from Jesse Vincent and Colin Benson, by the participants in the Cambridge, MA meeting on June 11, 1999, and by Roy Salisbury, who contributed the original version of Figure 5. The authors gratefully acknowledge their assistance.

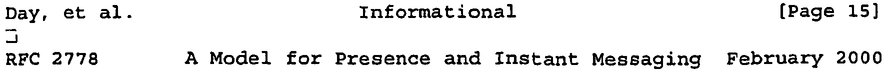

### 7. Authors' Addresses

Mark Day
Sight Path, Inc.
135 Beaver Street
Waltham, MA 02452
USA

EMail: mday@alum.mit.edu
(Formerly Mark_Day@lotus.com)

Jonathan Rosenberg
dynamicsoft
200 Executive Drive
Suite 120
West Orange, NJ 07046

Mail: jdrosen@dynamicsoft.com

Hiroyasu Sugano
Fujitsu Laboratories Ltd.
64 Nishiwaki, Ohkubo-cho
Akashi 674-8555
Japan

EMail: suga@flab.fujitsu.co.jp

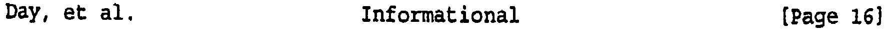

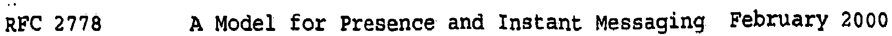

### 8. Full Copyright Statement

### Copyright (C) The Internet Society (2000). All Rights Reserved.

This document and translations of it may be copied and furnished to others, and derivative works that comment on or otherwise explain it or assist in its implementation may be prepared, copied, published and distributed, in whole or in part, without restriction of any kind, provided that the above copyright notice and this paragraph are included on all such copies and derivative works. However, this document itself may not be modified in any way, such as by removing the copyright notice or references to the Internet Society or other Internet organizations, except as needed for the purpose of developing Internet standards in which case the procedures for copyrights defined in the Internet Standards process must be followed, or as required to translate it into languages other than English.

The limited permissions granted above are perpetual and will not be revoked by the Internet Society or its successors or assigns.

This document and the information contained herein is provided on an "AS IS" basis and THE INTERNET SOCIETY AND THE INTERNET ENGINEERING TASK FORCE DISCLAIMS ALL WARRANTIES, EXPRESS OR IMPLIED, INCLUDING BUT NOT LIMITED TO ANY WARRANTY THAT THE USE OF THE INFORMATION HEREIN WILL NOT INFRINGE ANY RIGHTS OR ANY IMPLIED WARRANTIES OF MERCHANTABILITY OR FITNESS FOR A PARTICULAR PURPOSE.

### Acknowledgement

Funding for the RFC Editor function is currently provided by the Internet Society.

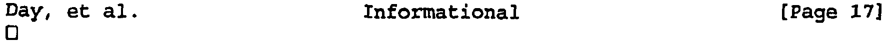

### APPENDIX B

| | |
|---|---|
| Network Working Group | M. Day |
| Request for Comments: 2779 | Lotus |
| Category: Informational | S. Aggarwal |
| | Microsoft |
| | G. Mohr |
| | Activerse |
| | J. Vincent |
| | Into Networks |
| | February 2000 |

### Instant Messaging / Presence Protocol Requirements

### Status of this Memo

This memo provides information for the Internet community. It does not specify an Internet standard of any kind. Distribution of this memo is unlimited.

### Copyright Notice

Copyright (C) The Internet Society (2000). All Rights Reserved.

### Abstract

Presence and Instant Messaging have recently emerged as a new medium of communications over the Internet. Presence is a means for finding, retrieving, and subscribing to changes in the presence information (e.g. "online" or "offline") of other users. Instant messaging is a means for sending small, simple messages that are delivered immediately to online users.

Applications of presence and instant messaging currently use independent, non-standard and non-interoperable protocols developed by various vendors. The goal of the Instant Messaging and Presence Protocol (IMPP) Working Group is to define a standard protocol so that independently developed applications of instant messaging and/or presence can interoperate across the Internet. This document defines a minimal set of requirements that IMPP must meet.

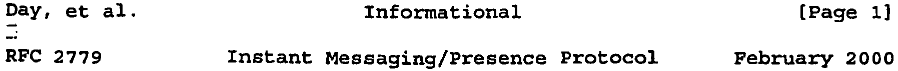

### Table of Contents

| | | | | |
|---|---|---|---|---|
| 1. | | Terminology................................................... | | 3 |
| 2. | | Shared Requirements.................................... | | 4 |
| 2.1. | | Namespace and Administration .......................... | | 5 |
| 2.2. | | Scalability............................................................. | | 5 |
| 2.3. | | Access Control..................................................... | | 6 |
| 2.4. | | Network Topology................................................ | | 6 |
| 2.5. | | Message Encryption and Authentication.............. | | 7 |
| 3. | Additional Requirements for PRESENCE INFORMATION.............. | | | 7 |
| 3.1. | | Common Presence Format..................................... | | 7 |
| 3.2. | | Presence Lookup and Notification........................... | | 8 |
| 3.3. | | Presence Caching and Replication........................... | | 8 |
| 3.4. | | Performance................................................ | | 9 |
| 4. | Additional Requirements for INSTANT MESSAGES.................. | | | 9 |
| 4.1. | | Common Message Format...................................... | | 9 |
| 4.2. | | Reliability................................................ | | 10 |
| 4.3. | | Performance................................................ | | 10 |
| 4.4. | | Presence Format............................................ | | 10 |
| 5. | Security Considerations....................................... | | | 11 |
| 5.1. | | Requirements related to SUBSCRIPTIONS...................... | | 11 |
| 5.2. | | Requirements related to NOTIFICATION....................... | | 12 |
| 5.3. | | Requirements related to receiving a NOTIFICATION........... | | 13 |
| 5.4. | | Requirements related to INSTANT MESSAGES................... | | 13 |
| 6. | References.................................................... | | | 14 |
| 7. | Authors' Addresses............................................ | | | 15 |
| 8. | Appendix: Security Expectations and Deriving Requirements..... | | | 16 |
| 8.1. | | Presence Information....................................... | | 16 |
| 8.1.1. | | | Subscription............................................ | 16 |
| 8.1.2. | | | Publication............................................. | 19 |
| 8.1.3. | | | Publication for Notification............................ | 19 |
| 8.1.4. | | | Receiving a Notification................................ | 20 |
| 8.2. | | Instant Messaging.......................................... | | 21 |
| 8.2.1. | | | Named Instant Messaging................................. | 21 |
| 8.2.2. | | | Anonymous Instant Messaging............................. | 23 |
| 8.2.3. | | | Administrator Expectations.............................. | 24 |
| Full | | Copyright Statement......................................... | | 26 |

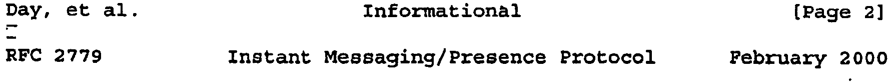

### 1. Terminology

The following terms are defined in [RFC 2778] and are used with those definitions in this document:
ACCESS RULES
CLOSED
FETCHER
INSTANT INBOX
INSTANT MESSAGE
NOTIFICATION
OPEN
POLLER
PRESENCE INFORMATION
PRESENCE SERVICE
PRESENTITY
PRINCIPAL
PROXY
SERVER
STATUS
SUBSCRIBER
SUBSCRIPTION
WATCHER

The terms MUST and SHOULD are used in the following sense while specifying requirements:
MUST: A proposed solution will have to meet this requirement.
SHOULD: A proposed solution may choose not to meet this requirement.

Note that this usage of MUST and SHOULD differs from that of RFC 2119.

Additionally, the following terms are used in this document and defined here:
ADMINISTRATOR: A PRINCIPAL with authority over local computer and network resources, who manages local DOMAINS or FIREWALLS. For security and other purposes, an ADMINISTRATOR often needs or wants to impose restrictions on network usage based on traffic type, content, volume, or endpoints. A PRINCIPAL's ADMINISTRATOR has authority over some or all of that PRINCIPAL's computer and network resources.
DOMAIN: A portion of a NAMESPACE.
ENTITY: Any of PRESENTITY, SUBSCRIBER, FETCHER, POLLER, or WATCHER (all defined in [RFC 2778]). 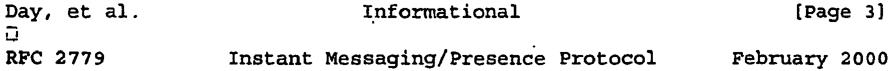
FIREWALL: A point of administrative control over connectivity. Depending on the policies being enforced, parties may need to take unusual measures to establish communications through the FIREWALL.
IDENTIFIER: A means of indicating a point of contact, intended for public use such as on a business card. Telephone numbers, email addresses, and typical home page URLs are all examples of IDENTIFIERS in other systems. Numeric IP addresses like 10.0.0.26 are not, and neither are URLs containing numerous CGI parameters or long arbitrary identifiers.
INTENDED RECIPIENT: The PRINCIPAL to whom the sender of an INSTANT MESSAGE is sending it.
NAMESPACE: The system that maps from a name of an ENTITY to the concrete implementation of that ENTITY. A NAMESPACE may be composed of a number of distinct DOMAINS.
OUT OF CONTACT: A situation in which some ENTITY and the PRESENCE SERVICE cannot communicate.
SUCCESSFUL DELIVERY: A situation in which an INSTANT MESSAGE was transmitted to an INSTANT INBOX for the INTENDED RECIPIENT, and the INSTANT INBOX acknowledged its receipt. SUCCESSFUL DELIVERY usually also implies that an INBOX USER AGENT has handled the message in a way chosen by the PRINCIPAL. However, SUCCESSFUL DELIVERY does not imply that the message was actually seen by that PRINCIPAL.

### 2. Shared Requirements

This section describes non-security requirements that are common to both an PRESENCE SERVICE and an INSTANT MESSAGE SERVICE. Section 6 describes requirements specific to a PRESENCE SERVICE, while Section 7 describes requirements specific to an INSTANT MESSAGE SERVICE. Section 8 describes security considerations. The reader should note that Section 11 is an appendix that provides historical context and aids in tracing the origins of requirements in Section 8. Section 11 is not, however, a statement of current IMPP requirements.

It is expected that Presence and Instant Messaging services will be particularly valuable to users over mobile IP wireless access devices. Indeed the number of devices connected to the Internet via wireless means is expected to grow substantially in the coming years. It is not reasonable to assume that separate protocols will be available for the wireless portions of the Internet. In addition, we note that wireless infrastructure is maturing rapidly; the work undertaken by this group should take into account the expected state of the maturity of the technology in the time-frame in which the

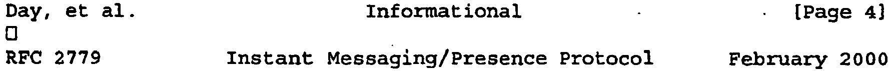

Presence and Instant Messaging protocols are expected to be deployed.

To this end, the protocols designed by this Working Group must be suitable for operation in a context typically associated with mobile wireless access devices, viz. high latency, low bandwidth and possibly intermittent connectivity (which lead to a desire to minimize round-trip delays), modest computing power, battery constraints, small displays, etc. In particular, the protocols must be designed to be reasonably efficient for small payloads.

### 2.1. Namespace and Administration

2.1.1. The protocols MUST allow a PRESENCE SERVICE to be available independent of whether an INSTANT MESSAGE SERVICE is available, and vice-versa.
2.1.2. The protocols must not assume that an INSTANT INBOX is necessarily reached by the same IDENTIFIER as that of a PRESENTITY. Specifically, the protocols must assume that some INSTANT INBOXes may have no associated PRESENTITIES, and vice versa.
2.1.3. The protocols MUST also allow an INSTANT INBOX to be reached via the same IDENTIFIER as the IDENTIFIER of some PRESENTITY.
2.1.4. The administration and naming of ENTITIES within a given DOMAIN MUST be able to operate independently of actions in any other DOMAIN.
2.1.5. The protocol MUST allow for an arbitrary number of DOMAINS within the NAMESPACE.

### 2.2. Scalability

2.2.1. It MUST be possible for ENTITIES in one DOMAIN to interoperate with ENTITIES in another DOMAIN, without the DOMAINS having previously been aware of each other.

The protocol MUST be capable of meeting its other functional and performance requirements even when
-- (2.2.2) there are millions of ENTITIES within a single DOMAIN.
-- (2.2.3) there are millions of DOMAINS within the single NAMESPACE. 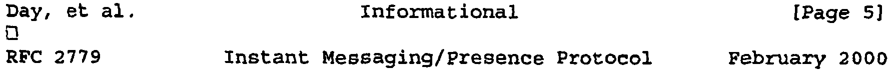
-- (2.2.4) every single SUBSCRIBER has SUBSCRIPTIONS to hundreds of PRESENTITIES.
-- (2.2.5) hundreds of distinct SUBSCRIBERS have SUBSCRIPTIONS to a single PRESENTITY.
-- (2.2.6) every single SUBSCRIBER has SUBSCRIPTIONS to PRESENTITIES in hundreds of distinct DOMAINS.

These are protocol design goals; implementations may choose to place lower limits.

### 2.3. Access Control

The PRINCIPAL controlling a PRESENTITY MUST be able to control
-- (2.3.1) which WATCHERS can observe that PRESENTITY's PRESENCE INFORMATION.
-- (2.3.2) which WATCHERS can have SUBSCRIPTIONS to that PRESENTITY's PRESENCE INFORMATION.
-- (2.3.3) what PRESENCE INFORMATION a particular WATCHER will see for that PRESENTITY, regardless of whether the WATCHER gets it by fetching or NOTIFICATION.
-- (2.3.4) which other PRINCIPALS, if any, can update the PRESENCE INFORMATION of that PRESENTITY.

The PRINCIPAL controlling an INSTANT INBOX MUST be able to control
-- (2.3.5) which other PRINCIPALS, if any, can send INSTANT MESSAGES to that INSTANT INBOX.
-- (2.3.6) which other PRINCIPALS, if any, can read INSTANT MESSAGES from that INSTANT INBOX.
   2.3.7. Access control MUST be independent of presence: the PRESENCE SERVICE MUST be able to make access control decisions even when the PRESENTITY is OUT OF CONTACT.

### 2.4. Network Topology

Note that intermediaries such as PROXIES may be necessitated between IP and non-IP networks, and by an end-user's desire to provide anonymity and hide their IP address. 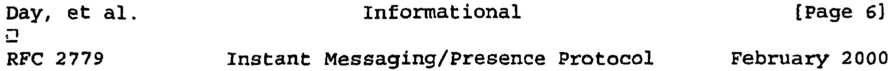
2.4.1. The protocol MUST allow the creation of a SUBSCRIPTION both directly and via intermediaries, such as PROXIES.
2.4.2. The protocol MUST allow the sending of a NOTIFICATION both directly and via intermediaries, such as PROXIES.
2.4.3. The protocol MUST allow the sending of an INSTANT MESSAGE both directly and via intermediaries, such as PROXIES.
2.4.4. The protocol proxying facilities and transport practices MUST allow ADMINISTRATORS ways to enable and disable protocol activity through existing and commonly-deployed FIREWALLS. The protocol MUST specify how it can be effectively filtered by such FIREWALLS.

### 2.5. Message Encryption and Authentication

2.5.1. The protocol MUST provide means to ensure confidence that a received message (NOTIFICATION or INSTANT MESSAGE) has not been corrupted or tampered with.
2.5.2. The protocol MUST provide means to ensure confidence that a received message (NOTIFICATION or INSTANT MESSAGE) has not been recorded and played back by an adversary.
2.5.3. The protocol MUST provide means to ensure that a sent message (NOTIFICATION or INSTANT MESSAGE) is only readable by ENTITIES that the sender allows.
2.5.4. The protocol MUST allow any client to use the means to ensure non-corruption, non-playback, and privacy, but the protocol MUST NOT require that all clients use these means at all times.

### 3. Additional Requirements for PRESENCE INFORMATION

The requirements in section 6 are applicable only to PRESENCE INFORMATION and not to INSTANT MESSAGES. Additional constraints on PRESENCE INFORMATION in a system supporting INSTANT MESSAGES appear in Section 7.4.

### 3.1. Common Presence Format

3.1.1. All ENTITIES MUST produce and consume at least a common base format for PRESENCE INFORMATION.
3.1.2. The common presence format MUST include a means to uniquely identify the PRESENTITY whose PRESENCE INFORMATION is reported. 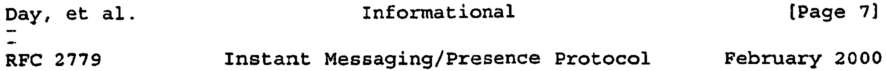
3.1.3. The common presence format MUST include a means to encapsulate contact information for the PRESENTITY's PRINCIPAL (if applicable), such as email address, telephone number, postal address, or the like.
3.1.4. There MUST be a means of extending the common presence format to represent additional information not included in the common format, without undermining or rendering invalid the fields of the common format.
3.1.5. The working group must define the extension and registration mechanisms for presence information schema, including new STATUS conditions and new forms for OTHER PRESENCE MARKUP.
3.1.6. The presence format SHOULD be based on IETF standards such as vCard [RFC 2426] if possible.

### 3.2. Presence Lookup and Notification

3.2.1. A FETCHER MUST be able to fetch a PRESENTITY's PRESENCE INFORMATION even when the PRESENTITY is OUT OF CONTACT.
3.2.2. A SUBSCRIBER MUST be able to request a SUBSCRIPTION to a PRESENTITY's PRESENCE INFORMATION, even when the PRESENTITY is OUT OF CONTACT.
3.2.3. If the PRESENCE SERVICE has SUBSCRIPTIONS for a PRESENTITY's PRESENCE INFORMATION, and that PRESENCE INFORMATION changes, the PRESENCE SERVICE MUST deliver a NOTIFICATION to each SUBSCRIBER, unless prevented by the PRESENTITY's ACCESS RULES.
3.2.4. The protocol MUST provide a mechanism for detecting when a PRESENTITY or SUBSCRIBER has gone OUT OF CONTACT.
3.2.5. The protocol MUST NOT depend on a PRESENTITY or SUBSCRIBER gracefully telling the service that it will no longer be in communication, since a PRESENTITY or SUBSCRIBER may go OUT OF CONTACT due to unanticipated failures.

### 3.3. Presence Caching and Replication

3.3.1. The protocol MUST include mechanisms to allow PRESENCE INFORMATION to be cached.
3.3.2. The protocol MUST include mechanisms to allow cached PRESENCE INFORMATION to be updated when the master copy changes. 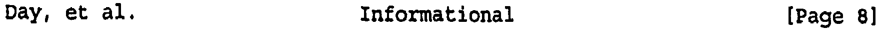 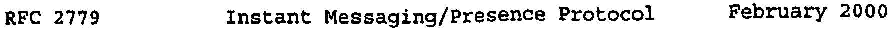
3.3.3 The protocol caching facilities MUST NOT circumvent established ACCESS RULES or restrict choice of authentication/encryption mechanisms.

### 3.4 Performance

3.4.1 When a PRESENTITY changes its PRESENCE INFORMATION, any SUBSCRIBER to that information MUST be notified of the changed information rapidly, except when such notification is entirely prevented by ACCESS RULES. This requirement is met if each SUBSCRIBER's NOTIFICATION is transported as rapidly as an INSTANT MESSAGE would be transported to an INSTANT INBOX.

### 4. Additional Requirements for INSTANT MESSAGES

The requirements in section 4 are applicable only to INSTANT MESSAGES and not to PRESENCE INFORMATION, with the exception of Section 4.4. Section 4.4 describes constraints on PRESENCE INFORMATION that are relevant only to systems that support both INSTANT MESSAGES and PRESENCE INFORMATION.

### 4.1. Common Message Format

4.1.1. All ENTITIES sending and receiving INSTANT MESSAGES MUST implement at least a common base format for INSTANT MESSAGES.
4.1.2. The common base format for an INSTANT MESSAGE MUST identify the sender and intended recipient.
4.1.3. The common message format MUST include a return address for the receiver to reply to the sender with another INSTANT MESSAGE.
4.1.4. The common message format SHOULD include standard forms of addresses or contact means for media other than INSTANT MESSAGES, such as telephone numbers or email addresses.
4.1.5. The common message format MUST permit the encoding and identification of the message payload to allow for non-ASCII or encrypted content.
4.1.6. The protocol must reflect best current practices related to internationalization.
4.1.7. The protocol must reflect best current practices related to accessibility. 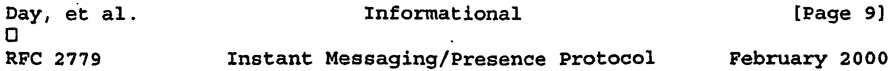
4.1.8. The working group MUST define the extension and registration mechanisms for the message format, including new fields and new schemes for INSTANT INBOX ADDRESSES.
4.1.9. The working group MUST determine whether the common message format includes fields for numbering or identifying messages. If there are such fields, the working group MUST define the scope within which such identifiers are unique and the acceptable means of generating such identifiers.
4.1.10. The common message format SHOULD be based on IETF-standard MIME [RFC 2045].

### 4.2. Reliability

4.2.1. The protocol MUST include mechanisms so that a sender can be informed of the SUCCESSFUL DELIVERY of an INSTANT MESSAGE or reasons for failure. The working group must determine what mechanisms apply when final delivery status is unknown, such as when a message is relayed to non-IMPP systems.

### 4.3 Performance

4.3.1. The transport of INSTANT MESSAGES MUST be sufficiently rapid to allow for comfortable conversational exchanges of short messages.

### 4.4 Presence Format

4.4.1. The common presence format MUST define a minimum standard presence schema suitable for INSTANT MESSAGE SERVICES.
4.4.2. When used in a system supporting INSTANT MESSAGES, the common presence format MUST include a means to represent the STATUS conditions OPEN and CLOSED.
4.4.3. The STATUS conditions OPEN and CLOSED may also be applied to messaging or communication modes other than INSTANT MESSAGE SERVICES.

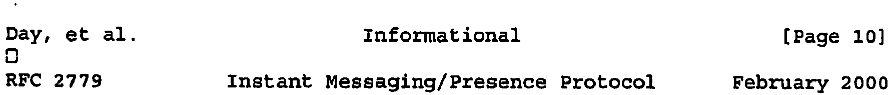

### 5. Security Considerations

Security considerations are addressed in section 2.3, Access Control, and section 2.5, Message authentication and encryption.

This section describes further security-related requirements that the protocol must meet.

The security requirements were derived from a set of all-encompassing "security expectations" that were then evaluated for practicality and implementability and translated into requirements. In the appendix, we describe the expectations and the process used to transform them into requirements. In this section, we simply list the consolidated set of derived requirements.

Note that in the requirements, ADMINISTRATORs may have privileges beyond those allowed to PRINCIPALs referred to in the requirements. (Unless otherwise noted, the individual expectations specifically refer to PRINCIPALs.) It is up to individual implementations to control administrative access and implement the security privileges of ADMINISTRATORs without compromising the requirements made on PRINCIPALS.

Unless noted otherwise, A,B,C are all names of non-ADMINISTRATOR PRINCIPALS.

### 5.1. Requirements related to SUBSCRIPTIONS

When A establishes a SUBSCRIPTION to B's PRESENCE INFORMATION:
5.1.1. The protocol MUST provide A means of identifying and authenticating that the PRESENTITY subscribed to is controlled by B.
5.1.2. If A so chooses, the protocol SHOULD NOT make A's SUBSCRIPTION to B obvious to a third party C.
5.1.3. The protocol MUST provide B with means of allowing an unauthenticated subscription by A.
5.1.4. The protocol MUST provide A means of verifying the accurate receipt of the content B chooses to disclose to A.
5.1.5. B MUST inform A if B refuses A's SUBSCRIPTION. Note that B may choose to accept A's SUBSCRIPTION, but fail to deliver any information to it (so-called "polite blocking"). See 5.1.15.
5.1.6. The protocol MUST NOT let any third party C force A to subscribe to B's PRESENCE INFORMATION without A's consent. 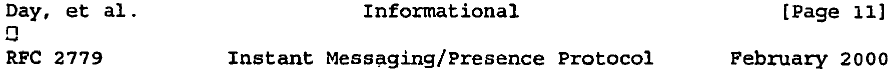
5.1.7. A MUST be able to cancel her SUBSCRIPTION to B's PRESENCE INFORMATION at any time and for any reason. When A does so, the PRESENCE SERVICE stops informing A of changes to B's PRESENCE INFORMATION.
5.1.8. The protocol MUST NOT let an unauthorized party C cancel A's SUBSCRIPTION to B.
5.1.9. If A's SUBSCRIPTION to B is cancelled, the service SHOULD inform A of the cancellation.
5.1.10. A SHOULD be able to determine the status of A's SUBSCRIPTION to B, at any time.
5.1.11. The protocol MUST provide B means of learning about A's SUBSCRIPTION to B, both at the time of establishing the SUBSCRIPTION and afterwards.
5.1.12. The protocol MUST provide B means of identifying and authenticating the SUBSCRIBER's PRINCIPAL, A.
5.1.13. It MUST be possible for B to prevent any particular PRINCIPAL from subscribing.
5.1.14. It MUST be possible for B to prevent anonymous PRINCIPALS from subscribing.
5.1.15. It MUST be possible for B to configure the PRESENCE SERVICE to deny A's subscription while appearing to A as if the subscription has been granted (this is sometimes called "polite blocking"). The protocol MUST NOT mandate the PRESENCE SERVICE to service subscriptions that are treated in this manner.
5.1.16. B MUST be able to cancel A's subscription at will.
5.1.17. The protocol MUST NOT require A to reveal A's IP address to B.
5.1.18 The protocol MUST NOT require B to reveal B's IP address to A.

### 5.2. Requirements related to NOTIFICATION

When a PRINCIPAL B publishes PRESENCE INFORMATION for NOTIFICATION to another PRINCIPAL A:
5.2.1. The protocol MUST provide means of ensuring that only the PRINCIPAL A being sent the NOTIFICATION by B can read the NOTIFICATION. 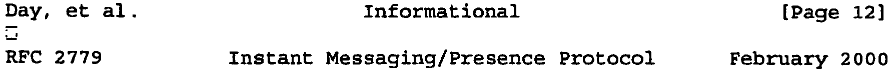
5.2.2. A should receive all NOTIFICATIONS intended for her.
5.2.3. It MUST be possible for B to prevent A from receiving notifications, even if A is ordinarily permitted to see such notifications. It MUST be possible for B to, at its choosing, notify different subscribers differently, through different notification mechanisms or through publishing different content. This is a variation on "polite blocking".
5.2.4. The protocol MUST provide means of protecting B from another PRINCIPAL C "spoofing" notification messages about B.
5.2.5. The protocol MUST NOT require that A reveal A's IP address to B.
5.2.6. The protocol MUST NOT require that B reveal B's IP address to A.

### 5.3. Requirements related to receiving a NOTIFICATION

When a PRINCIPAL A receives a notification message from another principal B, conveying PRESENCE INFORMATION,
5.3.1. The protocol MUST provide A means of verifying that the presence information is accurate, as sent by B.
5.3.2. The protocol MUST ensure that A is only sent NOTIFICATIONS from entities she has subscribed to.
5.3.3. The protocol MUST provide A means of verifying that the notification was sent by B.

### 5.4. Requirements related to INSTANT MESSAGES

When a user A sends an INSTANT MESSAGE M to another user B,
5.4.1. A MUST receive confirmation of non-delivery.
5.4.2. If M is delivered, B MUST receive the message only once.
5.4.3. The protocol MUST provide B means of verifying that A sent the message.
5.4.4. B MUST be able to reply to the message via another instant message.
5.4.5. The protocol MUST NOT always require A to reveal A's IP address, for A to send an instant message. 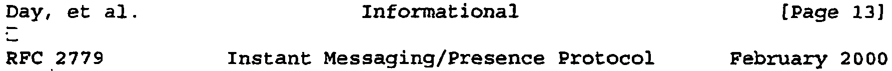
5.4.6. The protocol MUST provide A means of ensuring that no other PRINCIPAL C can see the content of M.
5.4.7. The protocol MUST provide A means of ensuring that no other PRINCIPAL C can tamper with M, and B means to verify that no tampering has occurred.
5.4.8. B must be able to read M.
5.4.9. The protocol MUST allow A to sign the message, using existing standards for digital signatures.
5.4.10. B MUST be able to prevent A from sending him messages

### 6. References

| | |
|---|---|
| [RFC 2778] | Day, M., Rosenberg, J. and H. Sagano, "A Model for Presence and Instant Messaging", RFC 2778, February 2000. |
| [RFC 2426] | Dawson, F. and T. Howes, "vCard MIME Directory Profile", RFC 2426, September 1998. |
| [RFC 2045] | Freed, N. and N. Borenstein, "Multipurpose Internet Mail Extensions (MIME) - Part One: Format of Internet Message Bodies", RFC 2045, November 1996. |
| [RFC 2119] | Bradner, S., "Key Words for Use in RFCs to Indicate Requirement Levels", BCP 14, RFC 2119, March 1997. |

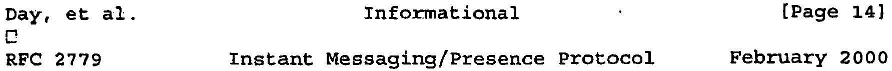

### 7. Authors' Addresses

Mark Day
SightPath, Inc.
135 Beaver Street
Waltham, MA 02452
USA

EMail: mday@alum.mit.edu
(Formerly Mark_Day@lotus.com)

Sonu Aggarwal
Microsoft Corporation
One Microsoft Way
Redmond, WA 98052
USA

EMail: sonuag@microsoft.com

Gordon Mohr

EMail: gojomo@usa.net
(Formerly gojomo@activerse.com)

Jesse Vincent
Into Networks, Inc.
150 Cambridgepark Drive
Cambridge, MA 02140
USA

EMail: jesse@intonet.com
(Formerly jvincent@microsoft.com)

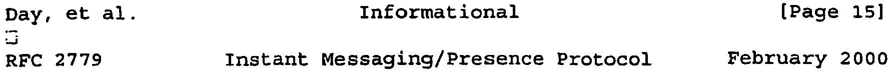

### 8. Appendix: Security Expectations and Deriving Requirements

This appendix is based on the security expectations discussed on the impp mailing list and assembled by Jesse Vincent. The original form of numbering has been preserved in this appendix (so there are several different items labeled B1, for example). The derived requirements have new numbers that are consistent with the main body of the document. This appendix is included to provide a connection from discussions on the list to the requirements of Section 8, but it is not intended to introduce any new requirements beyond those presented in Sections 5 through 8.

### 8.1. PRESENCE INFORMATION

In the case of PRESENCE INFORMATION, the controlling PRINCIPAL's privacy interests are paramount; we agreed that "polite blocking" (denying without saying that the subscription is denied, or providing false information) should be possible.

### 8.1.1. Subscription

When a user Alice subscribes to another person, Bob's presence info, Alice expects:

### A1. the PRESENTITY's PRINCIPAL, B, is identifiable and authenticated

Discussion: Stands as a requirement. Note that the protocol should provide Alice the capability of authenticating, without requiring that Alice authenticate every SUBSCRIPTION. This caveat is made necessary by performance concerns, among others, and applies to many of the other requirements derived below. [Requirement 5.1.1]

### A2. no third party will know that A has subscribed to B.

Discussion: This is somewhat unreasonable to enforce as is. For example, in some topologies, nothing can prevent someone doing traffic analysis to deduce that A has subscribed to B. We should merely require that the protocol not expose subscription information in any obvious manner. [Requirement 5.1.2]

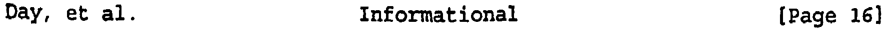

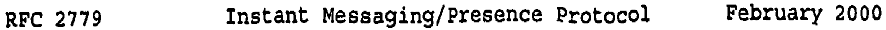

### A3. A has the capability to subscribe to B's presence without B's knowledge, if B permits anonymous subscriptions.

Discussion: An "anonymous subscription" above can have two implications - (i) B may allow an unauthenticated subscription by A, and (ii) B may be unaware of A's stated identity. Requirement (i) is reasonable [Requirement 8.1.3], but (ii) doesn't appear to be a core requirement -- it can be adequately simulated via a subscription pseudonym.

### A4. A will accurately receive what B chooses to disclose to A regarding B's presence.

Discussion: Stands as a requirement, with the "optional" caveat. [Requirement 8.1.4]

### A5. B will inform A if B refuses A's subscription

Discussion: Stands as a requirement. [Requirement 5.1.5]

### A6. No third party, C can force A to subscribe to B's presence without A's consent.

Discussion: Stands as a requirement. [Requirement 5.1.6]

### A7. A can cancel her subscription to B's presence at any time and for any reason. When A does so, she will receive no further information about B's presence information.

Discussion: This essentially stands. However, implementations may have to contend with a timing window where A receives, after sending her cancellation request, a notification sent by B before B received the cancellation request. Therefore, the requirement should focus on B's ceasing to send presence information, rather than A's ceasing to receive it. [Requirement 5.1.7]

### A8. no third party, C, can cancel A's subscription to B.

Discussion: Stands, although the administrative exception does apply. [Requirement 5.1.8]

### A9. A is notified if her subscription to B is cancelled for any reason.

Discussion: Although the intent is reasonable, there are a number of scenarios (e.g. overburdened server, clogged network, server crash) where delivering a notification to A of the cancellation is undesirable or impossible. Therefore, the service should make 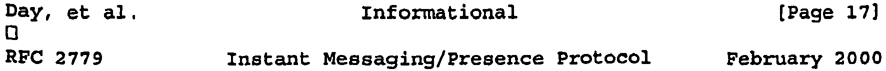 an attempt to inform, but this is not required. [Requirement 5.1.9]

### Bob expects:

### B1. B will be informed that A subscribed to B's presence information, as long as A has not subscribed anonymously.

Discussion: This essentially stands. However, B can also choose to determine A's subscription after the fact. [Requirement 5.1.10]

### B2. A is identifiable and authenticated.

Discussion: This stands as a requirement. [Requirement 5.1.11]

### B3. B can prevent a particular user, D, from subscribing.

Discussion: This stands as a requirement. [Requirement 5.1.12]

### B4. B can prevent anonymous users from subscribing.

Discussion: This stands as a requirement. [Requirement 5.1.13]

### B5. B's presence information is not republished by A to a third party, E, who does not.

Discussion: This is practically impossible to enforce, so it is omitted from the requirement set.

### B6. B can deny A's subscription without letting A know that she's been blocked.

Discussion: This "polite blocking" capability essentially stands; accepting a "denied" subscription should bear no implication on servicing it for status notifications. [Requirement 5.1.14]

### B7. B can cancel A's subscription at will.

Discussion: Stands as a requirement. [Requirement 5.1.15] Charlie, bob's network administrator expects:

### C1. C knows who is subscribed to B at all times.

Discussion: Administrators should be able to determine who is subscribed, but needn't be continuously informed of the list of subscribers. Also, in some cases user agents (e.g. proxies) may 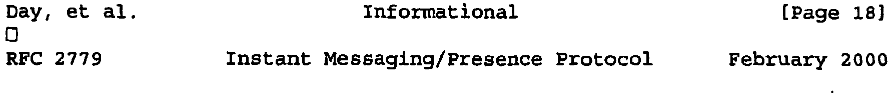 have subscribed on behalf of users, and in these cases the administrator can only determine the identity of these agents, not their users. [Requirement 5.1.16]

### C2. C can manage all aspects of A's presence information.

Discussion: This stands as a requirement. [Requirement 5.1.17]

### C3. C can control who can access A's presence information and exchange instant messages with A.

Discussion: This stands in principle, but C should be able to waive these capabilities if C desires. [Requirement 5.1.18)

### 8.1.2. Publication

The publisher of status information, Bob, expects:

### B1. That information about B is not provided to any entity without B's knowledge and consent.

Discussion: This is nearly impossible to accomplish, so it is omitted from the requirements.

### 8.1.3. Publication for Notification

When information is published for notification, B expects:

### B1. only a person being sent a notification, A, can read the notification.

Discussion: Stands as a requirement. [Requirement 5.2.1]

### B2. A reliably receives all notifications intended for her.

Discussion: This stands, although "Reliably" is a little strong (e.g. network outages, etc.). [Requirement 5.2.2]

### B3. B can prevent A from receiving notifications, even if A is ordinarily permitted to see such notifications. This is a variation on "polite blocking."

Discussion: This stands as a requirement. Also incorporated into this requirement is the notifications equivalent of the next expectation, B4. [Requirement 5.2.3]

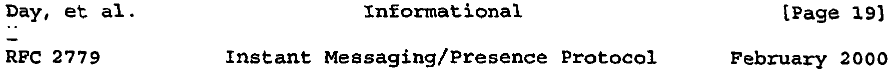

### B4. B can provide two interested parties A and E with different status information at the same time. (B could represent the same event differently to different people.)

Discussion: This stands as a requirement; it has been incorporated into the corresponding requirement for B3 above.

### B5. B expects that malicious C cannot spoof notification messages about B.

Discussion: Stands in principle, but it should be optional for B. [Requirement 5.2.4]

### 8.1.4. Receiving a Notification

When Alice receives a notification, the recipient, Alice, expects:

### A1. That the notification information is accurate, truthful.

Discussion: Stands in principle, although being "truthful" can't be a requirement, and the verification is optional for Alice. [Requirement 5.3.1]

### A2. That information about subscriptions remains private; people do not learn that A's subscription to B's information exists by watching notifications occur.

Discussion: This is omitted from the requirements, as traffic analysis, even of encrypted traffic, can convey this information in some situations.

### A3. That she only receives notifications of things she's subscribed to.

Discussion: Stands as a requirement. [Requirement 5.3.2]

### A4. Notifications come from the apparent sender, B.

Discussion: Stands in principle, although the verification should be optional for A. [Requirement 5.3.3]

### A5. A can tell the difference between a message generated by the user, and a message legitimately generated by the agent on behalf of the user.

Discussion: This could be quite difficult to enforce and could unduly restrict usage scenarios; this is omitted from the requirements.

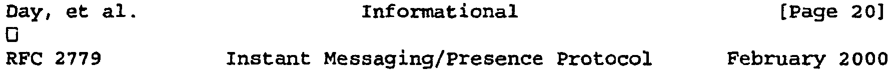

### A6. That information given by agents on behalf of users can also be expected to be truthful, complete, and legitimately offered; the user permitted the agent to publish these notifications.

Discussion: This is difficult to enforce and is omitted from the requirements.

### A7. A can prove that a notification from B was delivered in a timely fashion and can prove exactly how long the message took to be delivered.

Discussion: This is difficult to enforce and is omitted from the requirements. For example, such proof may entail global time synchronization mechanisms (since any system clocks have associated unreliability), which is outside the scope of this effort.

### A8. A can prove that B was indeed the sender of a given message.

Discussion: This is a duplication of expectation A4 above and is reflected in the corresponding requirement 5.3.3.

### 8.2. INSTANT MESSAGEs

### 8.2.1. Named Instant Messaging

When a user Alice sends an instant message M to another user Bob: Alice expects that she:

### A1. will receive notification of non-delivery

Discussion: Stands as a requirement. [Requirement 5.4.1]

Alice expects that Bob:

### 81. will receive the message

Discussion: covered by A1 and is reflected in the corresponding requirement 5.4.1.

### B2. will receive the message quickly

Discussion: Stands as a requirement, although this is also covered elsewhere (in the non-security requirements), so this is omitted from the security requirements.

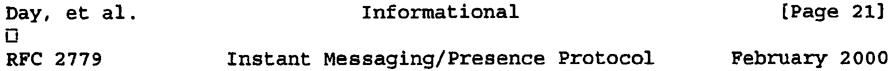

### B3. will receive the message only once

Discussion: Stands as a requirement. [Requirement 5.4.2]

### B4. will be able to verify that Alice sent the message

Discussion: Stands as a requirement. [Requirement 5.4.3]

### B5. will not know whether there were BCCs

Discussion: Emulating e-mail conventions and social protocols is not a core goal of this effort, and therefore references to standard mail fields are omitted from the requirements.

### B6. will be able to reply to the message

Discussion: Stands in principle; the recipient should be able to reply via an instant message. [Requirement 5.4.4]

### B7. will know if he was a bcc recipient

Discussion: Omitted, as noted above.

### B8. will not be able to determine any information, about A (such as her location or IP address) without A's knowledge and consent.

Discussion: "Any information about A" is too general; the requirement should focus on IP address. Further, "without A's knowledge and consent" may be overkill. [Requirement 5.4.5]

Alice expects that no other user Charlie will be able to:

### C1. see the content of M

Discussion: Stands in principle, although this should not be mandated for all IM communication. [Requirement 5.4.6]

### C2. tamper with M

Discussion: Stands, with the same caveat as above. [Requirement 5.4.7]

### C3. know that M was sent

Discussion: It is impossible to prevent traffic analysis, and this is therefore omitted from the requirements.

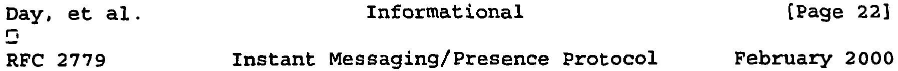

When a user Bob receives an instant message M from another user Alice:

### Bob expects that Bob:

### D1. will be able to read M

Discussion: Stands as a requirement. [Requirement 5.4.8]

### D2. will be able to verify M's authenticity (both Temporal and the sender's identity)

Discussion: As noted earlier, it is not reasonable to directly require temporal checks. The protocol should, however, allow signing messages using existing standards for signing. [Requirement 5.4.9]

### D3. will be able to verify M's integrity

Discussion: Stands as a requirement. [Requirement 5.4.10]

### D4. will be able to prevent A from sending him future messages

Discussion: Stands as a requirement. [Requirement 5.4.11]

### Bob expects that Alice:

### E1. intended to send the message to Bob

Discussion: This is covered by the corresponding requirement 5.4.6 for C1 above.

### E2. informed Bob of all CCs.

Discussion: As noted earlier, references to cc:'s are omitted from the requirements.

### 8.2.2. Anonymous Instant Messaging

Discussion: Anonymous instant messaging, as in "hiding the identity of the sender", is not deemed to be a core requirement of the protocol and references to it are therefore omitted from the requirements. Implementations may provide facilities for anonymous messaging if they wish, in ways that are consistent with the other requirements.
When a user Alice sends an anonymous instant message to another user Bob:

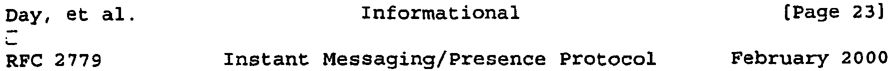

### Alice expects that Bob:

B1. will receive the message
B2. will receive the message quickly
B3. will receive the message only once
AB4.1. cannot know Alice sent it
AB4.2. will know that the IM is anonymous, and not from a specific named user
AB4.3 may not allow anonymous IMs
B5. will not know whether there were BCCs
B6. will be able to reply to the message

### Alice expects that she:

C1. will receive notification of non-delivery
AC2. will receive an error if the IM was refused

### Bob expects that he:

D1. will be able to read M
D2. will be able to verify M's authenticity (both temporal and the sender's identity)
D3. will be able to verify M's integrity
AD4. will know if an IM was sent anonymously
AD5. will be able to automatically discard anonymous IM if desired
AD6. will be able to control whether an error is sent to Alice if M is discarded.

### 8.2.3. Administrator Expectations

Charlie, Alice's network administrator expects:
C1. that C will be able to send A instant messages at any time.
C2. that A will receive any message he sends while A is online. 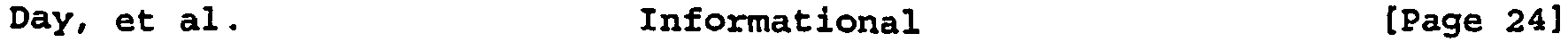 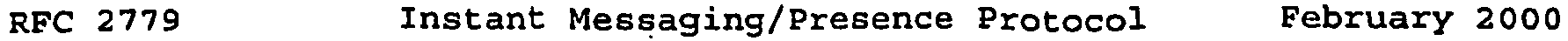
C3. that A will not be able to refuse delivery of any instant messages sent by C.

Discussion for C1-C3: It is not clear this needs to be specially handled at the protocol level; Administrators may accomplish the above objectives through other means. For example, an administrator may send a message to a user through the normal mechanisms. This is therefore omitted from the requirements.

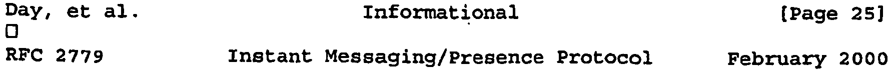

### Full Copyright Statement

Copyright (C) The Internet Society (2000). All Rights Reserved.

This document and translations of it may be copied and furnished to others, and derivative works that comment on or otherwise explain it or assist in its implementation may be prepared, copied, published and distributed, in whole or in part, without restriction of any kind, provided that the above copyright notice and this paragraph are included on all such copies and derivative works. However, this document itself may not be modified in any way, such as by removing the copyright notice or references to the Internet Society or other Internet organizations, except as needed for the purpose of developing Internet standards in which case the procedures for copyrights defined in the Internet Standards process must be followed, or as required to translate it into languages other than English.

The limited permissions granted above are perpetual and will not be revoked by the Internet Society or its successors or assigns.

This document and the information contained herein is provided on an "AS IS" basis and THE INTERNET SOCIETY AND THE INTERNET ENGINEERING TASK FORCE DISCLAIMS ALL WARRANTIES, EXPRESS OR IMPLIED, INCLUDING BUT NOT LIMITED TO ANY WARRANTY THAT THE USE OF THE INFORMATION HEREIN WILL NOT INFRINGE ANY RIGHTS OR ANY IMPLIED WARRANTIES OF MERCHANTABILITY OR FITNESS FOR A PARTICULAR PURPOSE.

### Acknowledgement

Funding for the RFC Editor function is currently provided by the Internet Society.

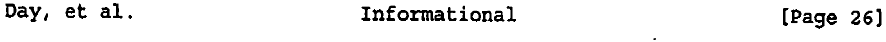

## Claims

1. A method of enabling authorized communication between a first communication device associated with a first entity and a second communication device associated with a second entity, comprising:
establishing a dialog session, using at least one dialog based interactive protocol, between the first communication device and the second communication device;
transmitting to the second communication device a link to a site used to authenticate the second communication device; and
associating authentication information with the dialog, thereby enabling the second communication device to engage in authorized communication with the first communication device.

2. A method according to claim 1, wherein the first and second communication devices comprise at least one of a computer and a wireless device.

3. A method according to claim 1, wherein said associating step comprises:
associating a unique identifier with the dialog;
providing, by a user of the second communication device, user credentials to the site;
transmitting, for use by the second communication device, an authorization token; and
using the unique identifier and the authorization token to execute an authorized dialog between the first communication device and the second communication device.

4. A method according to claim 3, wherein said associating step is performed by a third entity.

5. A method according to claim 3, wherein the first and second communication devices comprise at least one of a computer and a wireless device.

6. A method according to claim 3, wherein the site is secure.

7. A method according to claim 1, wherein the site is secure.

8. A method according to claim 1, wherein the first communication device and the second communication device use the same dialog based interactive protocol.

9. A method according to claim 1, wherein the first communication device and the second communication device use different dialog based interactive protocols.

10. A method according to claim 1, wherein said associating step is performed by a third entity.

11. A method according to claim 1, wherein the dialog session is facilitated by the transmission control protocol.

12. A method according to claim 11, wherein the dialog is facilitated by the HyperText Transport Protocol.

13. A method according to claim 3, further comprising:
setting, on a hosts file of the second communication device, the internet protocol address of a server providing the dialog based interactive protocol service to be a loopback address;
returning the loopback address associated with the dialog based interactive protocol server, stored in the hosts file, to a client operative with the second communication device;
using the client to establish a connection with the loopback address;
establishing communication between the client and an add-on service module operative with the second communication device; and
establishing a communication link between the interactive protocol server and the add-on services module.

14. A method according to claim 13, wherein the add-on service module provides at least one of encryption, filtering, and storage of at least a portion of the dialog session.

15. A method according to claim 1, further comprising:
setting, on a hosts file of the first communication device, the internet protocol address of a server providing the dialog based interactive protocol service to be a loopback address;
returning the loopback address associated with the dialog based interactive protocol server, stored in the host file, to a client operative with the second communication device;
using the client to establish a connection with the loopback address;
establishing communication between the client and an add-on service module operative with the first communication device; and
establishing a communication link between the interactive protocol server and the add-on services module.

16. A method according to claim 15, wherein the add-on service module provides at least one of encryption, filtering, and storage of at least a portion of the dialog session.

17. A computer program product residing on a computer readable medium, for use in a computer network environment that provides authorized communication between a first communication device and a second communication device, the computer program product comprising instructions for causing a computer to:
establish a dialog session, using at least one dialog based interactive protocol, between a first communication device and a second communication device;
transmit to the second communication device a link to a site used to authenticate the second communication device; and
associate authentication information with the dialog, thereby enabling the second communication device to engage in authorized communication with the first communication device.

18. A computer program product according to claim 17, wherein the first and second communication devices comprise at least one of a computer and a wireless device.

19. A computer program product according to claim 17, wherein said instructions for causing a computer to associate authentication information with the dialog include instructions to:
associate a unique identifier with the dialog;
provide, by a user of the second communication device, user credentials to the site; transmit, for use by the second communication device, an authorization token; and
use the unique identifier and the authorization token to execute and maintain the context of an authorized dialog between the first communication device and the second communication device.

20. A computer program product according to claim 17, wherein the computer program product further comprises instructions to:
set, on a hosts file of the second communication device, the internet protocol address of a server providing the dialog based interactive protocol service to be a loopback address;
return the loopback address, stored in the host file associated with the dialog based interactive protocol server, to a client operative with the second communication device;
use the client to establish a connection with the loopback address; establish communication between the client and an add-on service module operative with the second communication device; and
establish a communication link between the interactive protocol server and the add-on services module.

21. A computer program product according to claim 19, wherein said associating is performed by a third entity.

22. A computer program product according to claim 19, wherein the first and second communication devices comprise at least one of a computer and a wireless device.

23. A computer program product according to claim 19, wherein the site is secure.

24. A computer program product according to claim 17, wherein the site is secure.

25. A computer program product according to claim 17, wherein the first communication device and the second communication device use the same dialog based interactive protocol.

26. A computer program product according to claim 17, wherein the first communication device and the second communication device use different dialog based interactive protocols.

27. A computer program product according to claim 17, wherein said associating is performed by a third entity.

28. A computer program product according to claim 17, wherein the dialog session is facilitated by the transmission control protocol.

29. A computer program product according to claim 28, wherein the dialog is facilitated by the HyperText Transport Protocol.

30. A computer program product according to claim 20, wherein the add-on service module provides at least one of encryption, filtering, and storage of at least a portion of the dialog session.

31. A computer program product according to claim 17, the computer program product further comprising instructions for causing a computer to:
set, on a hosts file of the first communication device, the internet protocol address of a server providing the dialog based interactive protocol service to be a loopback address;
return the loopback address associated with the dialog based interactive protocol server, stored in the host file, to a client operative with the second communication device;
use the client to establish a connection with the loopback address;
establish communication between the client and an add-on service module operative with the first communication device; and
establish a communication link between the interactive protocol server and the add-on services module.

32. A computer program product according to claim 31, wherein the add-on service module provides at least one of encryption, filtering, and storage of at least a portion of the dialog session.

33. A device that provides an interface between a first communication device associated with a first entity and second communication device associated with a second entity, said device comprising:
at least one memory area; and
at least one processor that (i) establishes a dialog session between the first communication device and the second communication device, (ii) transmits to the second communication device a link to a site used to authenticate a user of the second communication device; and (iii) associates authentication information with the dialog, thereby enabling the user to engage in authorized communication with the first entity.

34. A device according to claim 28, wherein the first and second communication devices comprise at least one of a computer and a wireless device.

35. A device according to claim 33, wherein the processor is associated with a third entity.

36. A device according to claim 33, wherein said processor associates authentication information with the dialog by:
associating a unique identifier with the dialog;
providing user credentials to the first entity;
receiving an authorization token; and
using the unique identifier and the authorization token to execute an authorized dialog between the first and second communication devices.

37. A device according to claim 33, wherein the first communication device and the second communication device use the same dialog based interactive protocol.

38. A device according to claim 33, wherein the first communication device and the second communication device use different dialog based interactive protocols.

39. A device according to claim 33, wherein the dialog session is facilitated by the transmission control protocol.

40. A device according to claim 39, wherein the dialog is facilitated by the HyperText Transport Protocol.

## Patentansprüche

1. Verfahren zum Ermöglichen einer autorisierten Kommunikation zwischen einer ersten Kommunikationseinrichtung, die einer ersten Einheit zugeordnet ist, und einer zweiten Kommunikationseinrichtung, die einer zweiten Einheit zugeordnet ist, mit:
Bilden einer Dialogsession zwischen der ersten Kommunikationseinrichtung und der zweiten Kommunikationseinrichtung, wobei mindestens ein dialogbasiertes, interaktives Protokoll verwendet wird.
Übertragen eines Link zu einem Netzwerkstandard, der verwendet wird, um die zweite Kommunikationseinrichtung zu authentifizieren, an die zweite Kommunikationseinrichtung und
Zuordnen von Authentifizierungsinformationen zu dem Dialog, wodurch es der zweiten Kommunikationseinrichtung ermöglicht wird, in autorisierte Kommunikation mit der ersten Kommunikationseinrichtung zu treten.

2. Verfahren nach Anspruch 1, wobei die ersten und zweiten Kommunikationseinrichtungen mindestens einen Computer oder eine Drahtloseinrichtung aufweisen.

3. Verfahren nach Anspruch 1, wobei der Zuordnungsschritt umfasst:
Zuordnen eines eindeutigen Identifizierers zu dem Dialog,
Bereitstellen von Benutzerberechtigungsnachweisen durch den Benutzer der zweiten Kommunikationseinrichtung an den Netzwerkstandard,
Übertragen eines Autorisierungstoken zur Benutzung durch die zweite Kommunikationseinrichtung und
Verwenden des eindeutigen Identifizierers und des Autorisierungstoken, um einen autorisierten Dialog zwischen der ersten Kommunikationseinrichtung und der zweiten Kommunikationseinrichtung auszuführen.

4. Verfahren nach Anspruch 3, wobei der Zuordnungsschritt von einer dritten Einheit ausgeführt wird.

5. Verfahren nach Anspruch 3, wobei die ersten und zweiten Kommunikationseinrichtungen mindestens einen Computer oder eine Drahloseinrichtung aufweisen.

6. Verfahren nach Anspruch 3, wobei der Netzwerkstandard sicher ist.

7. Verfahren nach Anspruch 1, wobei der Netzwerkstandard sicher ist.

8. Verfahren nach Anspruch 1, wobei die erste Kommunikationseinrichtung und die zweite Kommunikationseinrichtung das gleiche dialogbasierte interaktive Protokoll verwenden.

9. Verfahren nach Anspruch 1, wobei die erste Kommunikationseinrichtung und die zweite Kommunikationseinrichtung verschiedene dialogbasierte interaktive Protokolle verwenden.

10. Verfahren nach Anspruch 1, wobei der Zuordnungsschritt von einer dritten Einheit ausgeführt wird.

11. Verfahren nach Anspruch 1, wobei die Dialogsession durch das Übertragungssteuerungsprotokoll ermöglicht wird.

12. Verfahren nach Anspruch 11, wobei der Dialog durch das HyperText Transport Protocol ermöglicht wird.

13. Verfahren nach Anspruch 3, darüber hinaus mit:
Einstellen der Internetprotokolladresse eines Servers, der den dialogbasierten interaktiven Protokolldienst bereitstellt, in einem Hostfile der zweiten Kommunikationseinrichtung, sodass sie eine Prüfschleifenadresse ist,
Zurückgeben der dem Server für ein dialogbasiertes interaktives Protokoll zugeordneten Prüfschleifenadresse, die in dem Hostfile gespeichert ist, an einen Client, der mit der zweiten Kommunikationseinrichtung betreibbar ist,
Verwenden des Clients, sodass eine Verbindung mit der Prüfschleifenadresse gebildet wird,
Bilden einer Kommunikation zwischen dem Client und einem Zusatzdienstmodul, das mit der zweiten Kommunikationseinrichtung betreibbar ist, und
Bilden einer Kommunikationsverbindung zwischen dem Server für ein interaktives Protokoll und dem Zusatzdienstmodul.

14. Verfahren nach Anspruch 13, wobei das Zusatzdienstmodul mindestens eine Verschlüsselung, eine Filterung oder eine Speicherung mindestens eines Abschnitts der Dialogsession bereitstellt.

15. Verfahren nach Anspruch 1 darüber hinaus mit:
Einstellen der Internetprotokolladresse eines Servers, der den dialogbasierten, interaktiven Protokolldienst bereitstellt, in einem Hostfile der ersten Kommunikationseinrichtung, sodass sie eine Prüfschleifenadresse ist,
Zurückgeben der dem Server für ein dialogbasiertes, interaktives Protokoll zugeordneten Prüfschleifenadresse, die in dem Hostfile gespeichert ist, an einen Client, der mit der zweiten Kommunikationseinrichtung betreibbar ist,
Verwenden des Client, sodass eine Verbindung mit der Prüfschleifenadresse gebildet wird,
Bilden einer Kommunikation zwischen dem Client und einem Zusatzdienstmodul, das mit der ersten Kommunikationseinrichtung betreibbar ist, und
Bilden einer Kommunikationsverbindung zwischen dem Server für ein interaktives Protokoll und dem Zusatzdienstmodul.

16. Verfahren nach Anspruch 15, wobei das Zusatzdienstmodul mindestens eine Verschlüsselung, eine Filterung oder eine Speicherung mindestens eines Abschnitts der Dialogsession bereitstellt.

17. Computerprogrammprodukt, das in einem computerlesbaren Medium vorliegt, zur Verwendung in einer Computernetzwerkumgebung, die eine autorisierte Kommunikation zwischen einer ersten Kommunikationseinrichtung und einer zweiten Kommunikationseinrichtung bereitstellt, wobei das Computerprogrammprodukt Befehle umfasst zum Bewirken, dass ein Computer
eine Dialogsession zwischen einer ersten Kommunikationseinrichtung und einer zweiten Kommunikationseinrichtung bildet, wobei mindestens ein dialogbasiertes interaktives Protokoll verwendet wird,
einen Link auf einen Netzwerkstandard, der verwendet wird, um die zweite Kommunikationseinrichtung zu authentifizieren, an die zweite Kommunikationseinrichtung überträgt und
Authentifizierungsinformation dem Dialog zuordnet, wodurch es der zweiten Kommunikationseinrichtung ermöglicht wird, in autorisierte Kommunikation mit der ersten Kommunikationseinrichtung zu treten.

18. Computerprogrammprodukt nach Anspruch 17, wobei die ersten und zweiten Kommunikationseinrichtungen mindestens einen Computer oder eine Drahtloseinrichtung aufweisen.

19. Computerprogrammprodukt nach Anspruch 17, wobei die Befehle zum Bewirken, dass ein Computer Authentifizierungsinformation dem Dialog zuordnet, Befehle umfassen, sodass:
ein eindeutiger Identifizierer dem Dialog zugeordnet wird,
Benutzerberechtigungsnachweise von einem Benutzer der zweiten Kommunikationseinrichtung dem Netzwerkstandard bereitgestellt werden,
ein Autorisierungstoken zur Verwendung durch die zweite Kommunikationseinrichtung übertragen wird und
der eindeutige Identifizierer und der Autorisierungstoken verwendet werden, sodass der Kontext eines autorisierten Dialogs zwischen der ersten Kommunikationseinrichtung und der zweiten Kommunikationseinrichtung ausgeführt und aufrechterhalten wird.

20. Computerprogrammprodukt nach Anspruch 17, wobei das Computerprogrammprodukt darüber hinaus Befehle aufweist, sodass:
in einem Hostfile der zweiten Kommunikationseinrichtung die Internetprotokolladresse eines Servers, der den dialogbasierten interaktiven Protokolldienst bereitstellt, so eingestellt wird, dass sie eine Prüfschleifenadresse ist,
die in dem dem Server für ein dialogbasiertes, interaktives Protokoll zugeordneten Hostfile gespeicherte Prüfschleifenadresse an einen Client zurückgibt, der mit der zweiten Kommunikationseinrichtung betreibbar ist,
der Client verwendet wird, um eine Verbindung mit der Prüfschleifenadresse zu bilden,
eine Kommunikation zwischen dem Client und einem Zusatzdienstmodul, das mit der zweiten Kommunikationseinrichtung betreibbar ist, gebildet wird, und
eine Kommunikationsverbindung zwischen dem Server für ein interaktives Protokoll und dem Zusatzdienstmodul gebildet wird.

21. Computerprogrammprodukt nach Anspruch 19, wobei das Zuordnen von einer dritten Einheit ausgeführt wird.

22. Computerprogrammprodukt nach Anspruch 19, wobei die ersten und zweiten Kommunikationseinrichtungen mindestens einen Computer oder eine Drahtloseinrichtung aufweisen.

23. Computerprogrammprodukt nach Anspruch 19, wobei der Netzwerkstandard sicher ist.

24. Computerprogrammprodukt nach Anspruch 17, wobei der Netzwerkstandard sicher ist.

25. Computerprogrammprodukt nach Anspruch 17, wobei die erste Kommunikationseinrichtung und die zweite Kommunikationseinrichtung das gleiche dialogbasierte interaktive Protokoll verwenden.

26. Computerprogrammprodukt nach Anspruch 17, wobei die erste Kommunikationseinrichtung und die zweite Kommunikationseinrichtung verschiedene dialogbasierte interaktive Protokolle verwenden.

27. Computerprogrammprodukt nach Anspruch 17, wobei das Zuordnen von einer dritten Einheit ausgeführt wird.

28. Computerprogrammprodukt nach Anspruch 17, wobei die Dialogsession durch das Übertragungssteuerungsprotokoll ermöglicht wird.

29. Computerprogrammprodukt nach Anspruch 28, wobei der Dialog durch das HyperText Transport Protocol ermöglicht wird.

30. Computerprogrammprodukt nach Anspruch 20, wobei das Zusatzdienstmodul mindestens eine Verschlüsselung, eine Filterung oder eine Speicherung mindestens eines Abschnitts der Dialogsession bereitstellt.

31. Computerprogrammprodukt nach Anspruch 17, wobei das Computerprogrammprodukt darüber hinaus Befehle aufweist, um zu bewirken, dass ein Computer
in einem Hostfile der ersten Kommunikationseinrichtung die Internetprotokolladresse eines Servers, der den dialogbasierten, interaktiven Protokolldienst bereitstellt, so einstellt, dass sie eine Prüfschleifenadresse ist,
die dem Server für ein dialogbasiertes, interaktives Protokoll zugeordnete Prüfschleifenadresse, die in dem Hostfile gespeichert ist, an einen Client zurückgibt, der mit der zweiten Kommunikationseinrichtung betreibbar ist,
den Client verwendet, um eine Kommunikation mit der Prüfschleifenadresse zu bilden,
eine Kommunikation zwischen dem Client und einem Zusatzdienstmodul, das mit der ersten Kommunikationseinrichtung betreibbar ist, bildet und
eine Kommunikationsverbindung zwischen dem interaktiven Protokollserver und dem Zusatzdienstmodul bildet.

32. Computerprogrammprodukt nach Anspruch 31, wobei das Zusatzdienstmodul mindestens eine Verschlüsselung, eine Filterung oder eine Speicherung mindestens eines Abschnitts der Dialogsession bereitstellt.

33. Vorrichtung, die eine Schnittstelle zwischen einer ersten Kommunikationseinrichtung, die einer ersten Einheit zugeordnet ist, und einer zweiten Kommunikationseinrichtung, die einer zweiten Einheit zugeordnet ist, bereitstellt, wobei die Vorrichtung aufweist:
mindestens einen Speicherbereich und
mindestens einen Prozessor, der (i) eine Dialogsession zwischen der ersten Kommunikationseinrichtung und der zweiten Kommunikationseinrichtung bildet, (ii) einen Link auf einen Netzwerkstandard, der verwendet wird, um einen Benutzer der zweiten Kommunikationseinrichtung zu authentifizieren, an die zweite Kommunikationseinrichtung überträgt, und (iii) Authentifizierungsinformation dem Dialog zuordnet, wodurch es dem Benutzer ermöglicht wird in autorisierte Kommunikation mit der ersten Einheit zu treten.

34. Vorrichtung nach Anspruch 28, wobei die ersten und zweiten Kommunikationseinrichtungen mindestens einen Computer oder eine Drahtloseinrichtung aufweisen.

35. Vorrichtung nach Anspruch 33, wobei der Prozessor einer dritten Einheit zugeordnet ist.

36. Vorrichtung nach Anspruch 33, wobei der Prozessor dem Dialog Authentifizierungsinformation zuordnet durch:
Zuordnen eines eindeutigen Identifizierers zu dem Dialog,
Bereitstellen von Benutzerberechtigungsnachweisen an die erste Einheit,
Empfangen eines Authentifizierungstokens und
Benutzen des eindeutigen Identifizierers und des Authentifizierungstokens, um einen autorisierten Dialog zwischen den ersten und zweiten Kommunikationseinrichtungen auszuführen.

37. Vorrichtung nach Anspruch 33, wobei die erste Kommunikationseinrichtung und die zweite Kommunikationseinrichtung das gleiche dialogbasierte, interaktive Protokoll verwenden.

38. Vorrichtung nach Anspruch 33, wobei die erste Kommunikationseinrichtung und die zweite Kommunikationseinrichtung verschiedene dialogbasierte interaktive Protokolle verwenden.

39. Vorrichtung nach Anspruch 33, wobei die Dialogsession durch das Übertragungssteuerungsprotokoll ermöglicht wird.

40. Vorrichtung nach Anspruch 39, wobei der Dialog durch das HyperText Transport Protocol ermöglicht wird.

## Revendications

1. Procédé pour permettre une communication autorisée entre un premier dispositif de communication associé à une première entité et un deuxième dispositif de communication associé à une deuxième entité, comprenant :
l'établissement d'une session de dialogue, en utilisant au moins un protocole interactif à base de dialogue, entre le premier dispositif de communication et le deuxième dispositif de communication ;
la transmission au deuxième dispositif de communication d'un lien à un site utilisé pour authentifier le deuxième dispositif de communication ; et
l'association d'informations d'authentification au dialogue, permettant ainsi au deuxième dispositif de communication d'engager une communication autorisée avec le premier dispositif de communication.

2. Procédé selon la revendication 1, dans lequel les premier et deuxième dispositifs de communication comprennent au moins un parmi un ordinateur et un dispositif sans fil.

3. Procédé selon la revendication 1, dans lequel ladite étape d'association comprend :
l'association d'un identificateur unique au dialogue ;
la fourniture, par un utilisateur du deuxième dispositif de communication, de justificatifs d'identité d'utilisateur au site ;
la transmission, pour l'utilisation par le deuxième dispositif de communication, d'un jeton d'autorisation ; et
l'utilisation de l'identificateur unique et du jeton d'autorisation pour exécuter un dialogue autorisé entre le premier dispositif de communication et le deuxième dispositif de communication.

4. Procédé selon la revendication 3, dans lequel ladite étape d'association est effectuée par une troisième entité.

5. Procédé selon la revendication 3, dans lequel les premier et deuxième dispositifs de communication comprennent au moins un parmi un ordinateur et un dispositif sans fil.

6. Procédé selon la revendication 3, dans lequel le site est sécurisé.

7. Procédé selon la revendication 1, dans lequel le site est sécurisé.

8. Procédé selon la revendication 1, dans lequel le premier dispositif de communication et le deuxième dispositif de communication utilisent le même protocole interactif à base de dialogue.

9. Procédé selon la revendication 1, dans lequel le premier dispositif de communication et le deuxième dispositif de communication utilisent des protocoles interactifs à base de dialogue différents.

10. Procédé selon la revendication 1, dans lequel ladite étape d'association est effectuée par une troisième entité.

11. Procédé selon la revendication 1, dans lequel la session de dialogue est facilitée par le protocole de contrôle de transmission.

12. Procédé selon la revendication 11, dans lequel le dialogue est facilité par le protocole de transfert hypertexte.

13. Procédé selon la revendication 3, comprenant en outre :
la détermination, dans un fichier hôte du deuxième dispositif de communication, de l'adresse de protocole internet d'un serveur fournissant le service de protocole interactif à base de dialogue pour être une adresse de bouclage ;
le renvoi de l'adresse de bouclage associée au serveur de service de protocole interactif à base de dialogue, stockée dans le fichier hôte, à un client fonctionnant avec le deuxième dispositif de communication ;
l'utilisation du client pour établir une connexion avec l'adresse de bouclage ;
l'établissement d'une communication entre le client et un module de services additionnels fonctionnant avec le deuxième dispositif de communication ; et
l'établissement d'une liaison de communication entre le serveur de protocole interactif et le module de services additionnels.

14. Procédé selon la revendication 13, dans lequel le module de services additionnels fournit au moins un parmi le chiffrage, le filtrage et le stockage d'au moins une portion de la session de dialogue.

15. Procédé selon la revendication 1, comprenant en outre :
la détermination, dans un fichier hôte du premier dispositif de communication, de l'adresse de protocole internet d'un serveur fournissant le service de protocole interactif à base de dialogue pour être une adresse de bouclage ;
le renvoi de l'adresse de bouclage associée au serveur de service de protocole interactif à base de dialogue, stockée dans le fichier hôte, à un client fonctionnant avec le deuxième dispositif de communication ;
l'utilisation du client pour établir une connexion avec l'adresse de bouclage ;
l'établissement d'une communication entre le client et un module de services additionnels fonctionnant avec le premier dispositif de communication ; et
l'établissement d'une liaison de communication entre le serveur de protocole interactif et le module de services additionnels.

16. Procédé selon la revendication 15, dans lequel le module de services additionnels fournit au moins un parmi le chiffrage, le filtrage et le stockage d'au moins une portion de la session de dialogue.

17. Produit de programme d'ordinateur résidant sur un support lisible par ordinateur, pour l'utilisation dans un environnement de réseau informatique qui fournit une communication autorisée entre un premier dispositif de communication et un deuxième dispositif de communication, le produit de programme d'ordinateur comprenant des instructions pour amener un ordinateur à :
établir une session de dialogue, en utilisant au moins un protocole interactif à base de dialogue, entre un premier dispositif de communication et un deuxième dispositif de communication ;
transmettre au deuxième dispositif de communication un lien à un site utilisé pour authentifier le deuxième dispositif de communication ; et
associer des informations d'authentification au dialogue, permettant ainsi au deuxième dispositif de communication d'engager une communication autorisée avec le premier dispositif de communication.

18. Produit de programme d'ordinateur selon la revendication 17, dans lequel les premier et deuxième dispositifs de communication comprennent au moins un parmi un ordinateur et un dispositif sans fil.

19. Produit de programme d'ordinateur selon la revendication 17, dans lequel lesdites instructions pour amener un ordinateur à associer des informations d'authentification au dialogue comprennent des instructions pour :
associer un identificateur unique au dialogue ;
fournir, par un utilisateur du deuxième dispositif de communication, des justificatifs d'identité d'utilisateur au site ;
transmettre, pour l'utilisation par le deuxième dispositif de communication, un jeton d'autorisation ; et
utiliser l'identificateur unique et le jeton d'autorisation pour exécuter et maintenir le contexte d'un dialogue autorisé entre le premier dispositif de communication et le deuxième dispositif de communication.

20. Produit de programme d'ordinateur selon la revendication 17, dans lequel le produit de programme d'ordinateur comprend en outre des instructions pour :
déterminer, dans un fichier hôte du deuxième dispositif de communication, l'adresse de protocole internet d'un serveur fournissant le service de protocole interactif à base de dialogue pour être une adresse de bouclage ;
renvoyer l'adresse de bouclage, stockée dans le fichier hôte associé au serveur de service de protocole interactif à base de dialogue, à un client fonctionnant avec le deuxième dispositif de communication ;
utiliser le client pour établir une connexion avec l'adresse de bouclage ;
établir une communication entre le client et un module de services additionnels fonctionnant avec le deuxième dispositif de communication ; et
établir une liaison de communication entre le serveur de protocole interactif et le module de services additionnels.

21. Produit de programme d'ordinateur selon la revendication 19, dans lequel ladite association est effectuée par une troisième entité.

22. Produit de programme d'ordinateur selon la revendication 19, dans lequel les premier et deuxième dispositifs de communication comprennent au moins un parmi un ordinateur et un dispositif sans fil.

23. Produit de programme d'ordinateur selon la revendication 19, dans lequel le site est sécurisé.

24. Produit de programme d'ordinateur selon la revendication 17, dans lequel le site est sécurisé.

25. Produit de programme d'ordinateur selon la revendication 17, dans lequel le premier dispositif de communication et le deuxième dispositif de communication utilisent le même protocole interactif à base de dialogue.

26. Produit de programme d'ordinateur selon la revendication 17, dans lequel le premier dispositif de communication et le deuxième dispositif de communication utilisent des protocoles interactifs à base de dialogue différents.

27. Produit de programme d'ordinateur selon la revendication 17, dans lequel ladite association est effectuée par une troisième entité.

28. Produit de programme d'ordinateur selon la revendication 17, dans lequel la session de dialogue est facilitée par le protocole de contrôle de transmission.

29. Produit de programme d'ordinateur selon la revendication 28, dans lequel le dialogue est facilité par le protocole de transfert hypertexte.

30. Produit de programme d'ordinateur selon la revendication 20, dans lequel le module de services additionnels fournit au moins un parmi le chiffrage, le filtrage et le stockage d'au moins une portion de la session de dialogue.

31. Produit de programme d'ordinateur selon la revendication 17, le produit de programme d'ordinateur comprenant en outre des instructions pour amener un ordinateur à :
déterminer, dans un fichier hôte du premier dispositif de communication, l'adresse de protocole internet d'un serveur fournissant le service de protocole interactif à base de dialogue pour être une adresse de bouclage ;
renvoyer l'adresse de bouclage associée au serveur de service de protocole interactif à base de dialogue, stockée dans le fichier hôte, à un client fonctionnant avec le deuxième dispositif de communication ;
utiliser le client pour établir une connexion avec l'adresse de bouclage ;
établir une communication entre le client et un module de services additionnels fonctionnant avec le premier dispositif de communication ; et
établir une liaison de communication entre le serveur de protocole interactif et le module de services additionnels.

32. Produit de programme d'ordinateur selon la revendication 31, dans lequel le module de services additionnels fournit au moins un parmi le chiffrage, le filtrage et le stockage d'au moins une portion de la session de dialogue.

33. Dispositif qui fournit une interface entre un premier dispositif de communication associé à une première entité et un deuxième dispositif de communication associé à une deuxième entité, ledit dispositif comprenant :
au moins une zone de mémoire ; et
au moins un processeur qui (i) établit une session de dialogue entre le premier dispositif de communication et le deuxième dispositif de communication, (ii) transmet au deuxième dispositif de communication un lien à un site utilisé pour authentifier un utilisateur du deuxième dispositif de communication ; et (iii) associe des informations d'authentification au dialogue, permettant ainsi à l'utilisateur d'engager une communication autorisée avec la première entité.

34. Dispositif selon la revendication 28, dans lequel les premier et deuxième dispositifs de communication comprennent au moins un parmi un ordinateur et un dispositif sans fil.

35. Dispositif selon la revendication 33, dans lequel le processeur est associé à une troisième entité.

36. Dispositif selon la revendication 33, dans lequel ledit processeur associe des informations d'authentification au dialogue par :
l'association d'un identificateur unique au dialogue ;
la fourniture de justificatifs d'identité d'utilisateur à la première entité ;
la réception d'un jeton d'autorisation ; et
l'utilisation de l'identificateur unique et le jeton d'autorisation pour exécuter un dialogue autorisé entre les premier et deuxième dispositifs de communication.

37. Dispositif selon la revendication 33, dans lequel le premier dispositif de communication et le deuxième dispositif de communication utilisent le même protocole interactif à base de dialogue.

38. Dispositif selon la revendication 33, dans lequel le premier dispositif de communication et le deuxième dispositif de communication utilisent des protocoles interactifs à base de dialogue différents.

39. Dispositif selon la revendication 33, dans lequel la session de dialogue est facilitée par le protocole de contrôle de transmission.

40. Dispositif selon la revendication 39, dans lequel le dialogue est facilité par le protocole de transfert hypertexte.
